# EUROPEAN PATENT SPECIFICATION

(11) **EP 2 933 955 B1**
(45) Date of publication and mention of the grant of the patent: **28.06.2017**
(21) Application number: 14834700.8
(22) Date of filing: 21.01.2014
(51) Int. Cl.: H04L 12/26, H04L 29/06

(54) **DEEP PACKET INSPECTION METHOD, DEVICE, AND COPROCESSOR**
VERFAHREN UND VORRICHTUNG FÜR TIEFE PAKETUNTERSUCHUNG UND COPROZESSOR
PROCÉDÉ ET DISPOSITIF D'INSPECTION DE PAQUET EN PROFONDEUR ET CO-PROCESSEUR

(30) Priority: 05.08.2013 CN 201310337064
(43) Date of publication of application: 21.10.2015
(73) Proprietor: Huawei Technologies Co., Ltd., Longgang District Shenzhen, Guangdong 518129 (CN)
(72) Inventor: KFIR, Aviv, Shenzhen Guangdong 518129 (CN); MOSCOVICI, Daniel, Shenzhen Guangdong 518129 (CN); ZAK, Emil, Shenzhen Guangdong 518129 (CN); MO, Mo, Shenzhen Guangdong 518129 (CN)
(74) Representative: Kreuz, Georg Maria
(86) International application number: PCT/CN2014/071025
(87) International publication number: WO 2015/018188

(56) References cited:
- WO-A1-2013/032473
- CN-A- 101 102 184
- CN-A- 101 997 700
- CN-A- 102 932 203
- US-A1- 2009 190 505
- US-A1- 2011 238 855
- US-A1- 2012 204 190

## Description

### TECHNICAL FIELD

The present invention relate to computer technologies, and in particular, to a deep packet inspection method and device, and a coprocessor.

### BACKGROUND

The deep packet inspection (Deep Packet Inspection, DPI for short) technology, as a core technology for network intrusion detection and application protocol identification, plays an increasingly important role in the field of network and information security. The DPI technology implements deep analysis on a data packet by using a feature matching algorithm to obtain application information of the data packet, so as to implement services such as network optimization, application traffic control, and security detection.

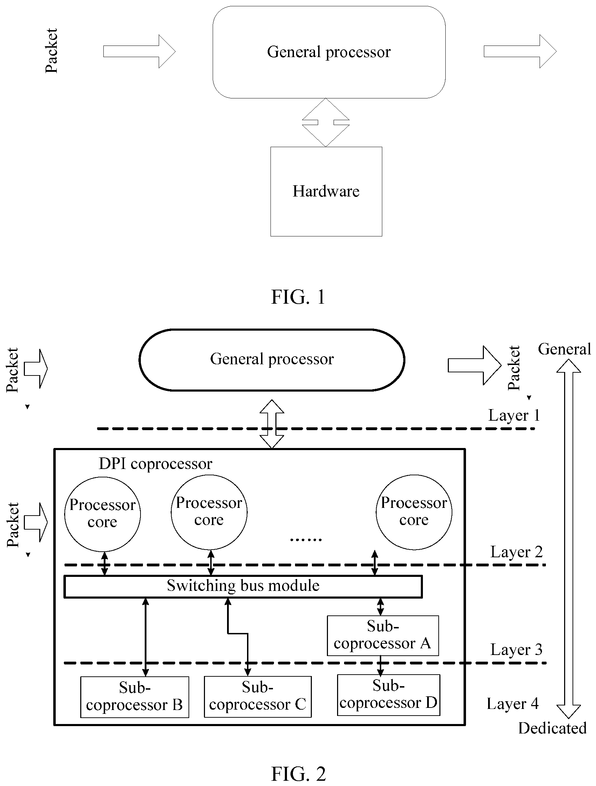

In the prior art, a DPI service is normally implemented by using a general processor, where the general processor integrates a matcher, and the general processor implements feature matching by using software logic to drive the matcher. Because the general processor normally is not designed specially for the DPI service, in order to ensure a universality requirement, the matcher integrated by the general processor generally supports only a universal matching algorithm, for example, a regular expression matching algorithm, but does not support a matching algorithm that is designed specially for the DPI service, which results in poor matching performance and becomes a bottleneck of service processing. Moreover, all DPI services are implemented in the general processor, and because resources of the general processor are limited, performance of the DPI services is limited. As shown in FIG. 1, in the prior art, another manner of implementing a DPI service is to permanently writing DPI service logic into a hardware entity, where the hardware entity may be an FPGA (Field-Programmable Gate Array, field-programmable gate array) or an ASIC (Application Specific Integrated Circuit, application-specific integrated circuit). For example, DPI service logic of a device is divided into four steps: 1. endpoint table matching; 2. IP port identification; 3. application-layer packet text feature matching; and 4. complex after-decoding identification. The first three steps may all be written permanently into hardware logic for implementation; however, step 4 whose logic is very complex cannot be implemented by hardware logic, and accordingly is left for a general processor to complete.

It is obvious that permanent writing of logic implemented by using hardware is subject to poor scalability: when the DPI service logic (for example, the four steps in the foregoing example become five steps or change in order) changes, hardware code needs to be rewritten, emulated, and then published to a device on a field network. This cannot be quickly adapted to a change in network traffic; moreover, because multiple steps of the DPI service logic are implemented by the general processor separately by using software and hardware acceleration chip logic, it is inevitable that the general processor interacts with a hardware acceleration chip multiple times, which causes a long delay in DPI processing.
WO 2013/032473 A1 relates to packet inspection in a network device. A first stage circuit includes at least one pattern matcher to identify selected flows in the packets satisfying first criteria and to divert the selected flows from standard processing in the network interface. A second stage circuit receives the selected flows, performs deep packet inspection on the selected flows to identify further selected flows satisfying a second criteria, and controls the network interface to apply alternative processing to the further selected flows and allow the selected flows other than the further selected flows to rejoin the standard processing.
US 2012/204190 A1 discloses a structure of network processing. Specifically, the structure comprises a parser and a coprocessor. The parser kicks off some packet processing functions to the coprocessor and gets in return the response from the coprocessor in order to use this result as a complement to its own packet process result. US 2011/238855 A1 relates to a flow processing facility used in computer securityn. Referring generally to the present invention, in a networked computer environment using packet switching communication, network security policies may be enforced by inspecting a packet and, as necessary, responding to a result of the packet inspection. The packet inspection may be directed at a header of the packet and/or a payload of the packet. Such packet inspection may be performed at any and all layers of a network communication protocol stack (such as and without limitation the Internet Protocol stack). Inspecting the payload of the packet may be referred to as "deep packet inspection" or "payload inspection."

### SUMMARY

The invention provides a deep packet inspection method as defined in independent claim 1 and a corresponding coprocessor as defined in independent claim 8. Various embodiments are defined in the dependent claims.

According to a first aspect, an embodiment of the present invention provides a deep packet inspection method, which includes:
receiving, by a transceiver module of a coprocessor, an original data packet sent by a general processor, and sending the original data packet to a processor core of the coprocessor; invoking, by the processor core, at least one sub-coprocessor of the coprocessor to perform application layer parsing on the original data packet, so as to obtain an application layer parsing result of the original data packet, where the application layer parsing result is used to indicate application layer information of the original data packet; and sending, by the processor core, the application layer parsing result to the general processor, so that the general processor processes the original data packet according to the application layer parsing result.

In a first possible implementation manner, after the receiving, by a transceiver module of a coprocessor, an original data packet sent by a general processor and before the sending the original data packet to a processor core of the coprocessor, the method further includes: performing flow processing on the original data packet; the sending the original data packet to a processor core includes: sending the flow-processed data packet to the processor core; and the invoking, by the processor core, at least one sub-coprocessor of the coprocessor to perform application layer parsing on the original data packet, so as to obtain an application layer parsing result of the original data packet includes: invoking, by the processor core, the at least one sub-coprocessor of the coprocessor to perform application layer parsing on the flow-processed data packet, so as to obtain the application layer parsing result of the original data packet.

With reference to the first possible implementation manner of the first aspect, in a second possible implementation manner, the performing flow processing on the original data packet includes: performing fragmented IP packet reassembly processing and out-of-order TCP packet reordering processing on the original data packet.

With reference to the first aspect, in a third possible implementation manner, at least two processor cores are provided in the coprocessor; and the sending the original data packet to a processor core of the coprocessor includes:
selecting one processor core from the at least two processor cores according to a load condition of each of the processor cores, and sending the original data packet to the selected processor core.

With reference to the first aspect, in a fourth possible implementation manner, the invoking, by the processor core, at least one sub-coprocessor of the coprocessor to perform application layer parsing on the original data packet specifically includes:
invoking, by the processor core by using a switching bus module of the coprocessor, the at least one sub-coprocessor of the coprocessor to perform the application layer parsing on the original data packet.

With reference to the first aspect, in a fifth possible implementation manner, the invoking, by the processor core, at least one sub-coprocessor of the coprocessor to perform application layer parsing on the original data packet, so as to obtain an application layer parsing result of the original data packet includes:
invoking, by the processor core, a protocol identifying sub-coprocessor included in the coprocessor; performing, by the protocol identifying sub-coprocessor under invocation of the processor core, endpoint lookup on the original data packet so as to obtain an endpoint lookup result, and returning the endpoint lookup result to the processor core; and determining, by the processor core, an application layer protocol type of the original data packet at least according to the endpoint lookup result, and using the determined application layer protocol type as the application layer parsing result of the original data packet.

With reference to the first aspect, in a sixth possible implementation manner, the invoking, by the processor core, at least one sub-coprocessor of the coprocessor to perform application layer parsing on the original data packet, so as to obtain an application layer parsing result of the original data packet includes: invoking, by the processor core, a protocol identifying sub-coprocessor included in the coprocessor; invoking, by the protocol identifying sub-coprocessor under invocation of the processor core, a string matching engine included in the coprocessor; performing, by the string matching engine under invocation of the protocol identifying sub-coprocessor, string matching on the original data packet so as to obtain a feature matching result, and returning the feature matching result to the processor core; and determining, by the processor core, an application layer protocol type of the original data packet at least according to the feature matching result, and using the application layer protocol type as the application layer parsing result of the original data packet.

With reference to the first aspect, in a seventh possible implementation manner, the invoking, by the processor core, at least one sub-coprocessor of the coprocessor to perform application layer parsing on the original data packet, so as to obtain an application layer parsing result of the original data packet includes:
invoking, by the processor core, a regular expression matching engine included in the coprocessor; performing, by the regular expression matching engine under invocation of the processor core, regular expression matching on the original data packet so as to obtain a feature matching result, and returning the feature matching result to the processor core; and determining, by the processor core, an application layer protocol type of the original data packet at least according to the feature matching result, and using the determined application layer protocol type as the application layer parsing result of the original data packet.

With reference to the first aspect, in an eighth possible implementation manner, the invoking, by the processor core, at least one sub-coprocessor of the coprocessor to perform application layer parsing on the original data packet, so as to obtain an application layer parsing result of the original data packet includes:
invoking, by the processor core, a protocol identifying sub-coprocessor included in the coprocessor to identify an application layer protocol of the original data packet, so as to obtain an application layer protocol type of the original data packet; and
invoking, by the processor core, a protocol parsing sub-coprocessor included in the coprocessor to perform protocol parsing on the original data packet so as to obtain a parsing result, and using the parsing result and the application layer protocol type as the application layer parsing result of the original data packet.

With reference to the sixth possible implementation manner of the first aspect, in a ninth possible implementation manner, the performing, by the string matching engine under invocation of the protocol identifying sub-coprocessor, string matching on the original data packet so as to obtain a feature matching result includes:
under invocation of the protocol identifying sub-coprocessor, reading, the string matching engine, a string matching algorithm state table from a first memory, and performing the string matching on the flow-processed data packet according to the string matching algorithm state table to obtain the feature matching result.

With reference to the first aspect or any one of the first to the ninth possible implementation manners of the first aspect, in an eleventh possible implementation manner, the sending, by the processor core, the application layer parsing result to the general processor includes: sending, by the processor core, the application layer parsing result to a result report processing module included in the coprocessor; and encapsulating, by the result report processing module, the application layer parsing result according to a preset format, and sending the encapsulated application layer parsing result to the general processor.

According to a second aspect, an embodiment of the present invention provides a deep packet inspection method, which includes:
sending, by a general processor, an original data packet to a coprocessor; receiving, by the general processor, an application layer parsing result of the original data packet and sent by the coprocessor, where the application layer parsing result is obtained by a processor core of the coprocessor by invoking at least one sub-coprocessor of the coprocessor to perform application layer parsing on the original data packet, and the application layer parsing result is used to indicate application layer information of the original data packet; and processing, by the general processor, the original data packet at least according to the application layer parsing result.

In a first possible implementation manner, the processing, by the general processor, the original data packet at least according to the application layer parsing result includes: determining, by the general processor according to the application layer parsing result, whether the original data packet is an encrypted data packet, and if the original data packet is an encrypted data packet, decrypting the original data packet.

In a second possible implementation manner, the processing, by the general processor, the original data packet at least according to the application layer parsing result includes:
determining, by the general processor according to the application layer parsing result, a service type of a flow to which the original data packet belongs, and performing traffic statistics, charging, or transmission acceleration on the flow according to the service type.

In a third possible implementation manner, the application layer parsing result of the original data packet includes: an application layer protocol type of the original data packet and a URL matching result, where the application layer protocol type of the original data packet is obtained by the processor core of the coprocessor by invoking a protocol identifying sub-coprocessor of the coprocessor to perform protocol identification on the original data packet, and the URL matching result is obtained, by the processor core of the coprocessor when determining that the application layer protocol type of the original data packet is the Hypertext Transfer Protocol, by invoking a uniform resource locator URL matching engine of the coprocessor to perform URL matching on the original data packet; and the processing, by the general processor, the original data packet at least according to the application layer parsing result includes: determining, by the general processor according to the application layer parsing result and the URL matching result, whether a flow to which the original data packet belongs is used to access a restricted website, and if the flow to which the original data packet belongs is used to access a restricted website, blocking the flow.

According to a third aspect, an embodiment of the present invention provides a coprocessor, which includes: a transceiver module, a sub-coprocessor, and a processor core, where
the transceiver module is configured to receive an original data packet sent by a general processor, and send the original data packet to the processor core;
the processor core is configured to invoke the sub-coprocessor to perform application layer parsing on the original data packet, so as to obtain an application layer parsing result of the original data packet, where the application layer parsing result is used to indicate application layer information of the original data packet; and send the application layer parsing result to the general processor, so that the general processor processes the original data packet at least according to the application layer parsing result; and
the sub-coprocessor is configured to perform the application layer parsing on the original data packet under invocation of the processor core, so as to obtain the application layer information of the original data packet.

In a first possible implementation manner, the transceiver module includes:
a receiving unit, configured to receive the original data packet sent by the general processor;
a flow processing unit, configured to perform flow processing on the original data packet after the receiving unit receives the original data packet sent by the general processor; and
a distributing unit, configured to send the flow-processed data packet to the processor core; and
the processor core is specifically configured to invoke the sub-coprocessor to perform the application layer parsing on the flow-processed data packet.

With reference to the first possible implementation manner of the third aspect, in a second possible implementation manner, the flow processing unit is specifically configured to perform fragmented IP packet reassembly processing and out-of-order TCP packet reordering processing on the original data packet.

With reference to the first or the second possible implementation manner of the third aspect, in a third possible implementation manner, there are at least two processor cores; and
the distributing unit is specifically configured to determine a load condition of each processor core of the at least two processor cores, select one processor core from the at least two processor cores according to the load condition of each of the processor cores, and send the flow-processed data packet to the selected processor core.

With reference to the third aspect, or the first, the second, or the third possible implementation manner of the third aspect, in a fourth possible implementation manner, the coprocessor further includes: a switching bus module; and
the processor core is specifically configured to invoke the sub-coprocessor by using the switching bus module of the coprocessor to perform the application layer parsing on the original data packet.

With reference to the third aspect, in a fifth possible implementation manner, the sub-coprocessor is specifically configured to perform endpoint lookup on the original data packet under invocation of the processor core so as to obtain an endpoint lookup result, and return the endpoint lookup result to the processor core; and the processor core is specifically configured to determine an application layer protocol type of the original data packet at least according to the endpoint lookup result, and use the determined application layer protocol type as the application layer parsing result of the original data packet and send the application layer parsing result to the general processor.

With reference to the third aspect, in a sixth possible implementation manner, the sub-coprocessor includes: a protocol identifying sub-coprocessor and a string matching engine, where the protocol identifying sub-coprocessor is specifically configured to invoke the string matching engine under invocation of the processor core, where the string matching engine performs string matching on the original data packet under invocation of the protocol identifying sub-coprocessor so as to obtain a feature matching result, and returns the feature matching result to the processor core; and the processor core is specifically configured to determine an application layer protocol type of the original data packet at least according to the feature matching result, and use the determined application layer protocol type as the application layer parsing result of the original data packet and send the application layer parsing result to the general processor.

With reference to the third aspect, in a seventh possible implementation manner, the sub-coprocessor is specifically: a regular expression matching engine, where the regular expression matching engine is configured to perform regular expression matching on the original data packet under invocation the processor core so as to obtain a feature matching result, and return the feature matching result to the processor core; and the processor core is specifically configured to determine an application layer protocol type of the original data packet at least according to the feature matching result, and use the determined application layer protocol type as the application layer parsing result of the original data packet and send the application layer parsing result to the general processor.

With reference to the sixth possible implementation manner of the third aspect, in an eighth possible implementation manner, the sub-coprocessor further includes: a protocol parsing sub-coprocessor, where the protocol parsing sub-coprocessor is configured to perform protocol parsing on the original data packet so as to obtain a parsing result, and return the parsing result to the processor core; and the processor core is further configured to send the parsing result to the general processor, so that the general processor processes the original data packet according to the application layer protocol type and the parsing result.

With reference to the sixth possible implementation manner of the third aspect, in a ninth possible implementation manner, the string matching engine is specifically configured to, under invocation of the protocol identifying sub-coprocessor, read a string matching algorithm state table from a first memory, perform string matching on the original data packet according to the string matching algorithm state table to obtain the feature matching result, and return the feature matching result to the processor core, where the first memory is configured to store the string matching algorithm state table.

With reference to the ninth possible implementation manner of the third aspect, in a tenth possible implementation manner, the processor core is specifically configured to read a condition and rule data structure from a second memory, and determine the application layer protocol type according to the feature matching result and the condition and rule data structure, where the second memory is configured to store the condition and rule data structure.

According to a fourth aspect, an embodiment of the present invention provides a general processor, which includes:
a sending module, configured to send an original data packet to a coprocessor; a receiving module, configured to receive an application layer parsing result of the original data packet and sent by the coprocessor, where the application layer parsing result is obtained by a processor core of the coprocessor by invoking at least one sub-coprocessor of the coprocessor to perform application layer parsing on the original data packet, and the application layer parsing result is used to indicate application layer information of the original data packet; and a processing module, configured to process the original data packet at least according to the application layer parsing result.

In a first possible implementation manner, the processing module is specifically configured to decrypt the original data packet if it is identified according to the application layer parsing result that the original data packet is an encrypted data packet.

In a second possible implementation manner,
the application layer parsing result of the original data packet includes: an application layer protocol type of the original data packet and a URL matching result, where the URL matching result is obtained, by the processor core of the coprocessor when determining that the application layer protocol type of the original data packet is the Hypertext Transfer Protocol, by invoking a uniform resource locator URL matching engine of the coprocessor to perform URL matching on the original data packet; and
the processing module is specifically configured to determine, according to the application layer protocol type of the original data packet and the URL matching result, whether a flow to which the original data packet belongs is used to access a restricted website, and if the flow to which the original data packet belongs is used to access a restricted website, block the flow.

According to a fifth aspect, an embodiment of the present invention provides a deep packet inspection device, which includes: the coprocessor provided by any embodiment of the present invention and the general processor provided by any embodiment of the present invention.

In a first possible implementation manner, there is one general processor.

In a second possible implementation manner, there are at least two general processors; and the deep packet inspection apparatus further includes a network adapter and a load balancing apparatus, where the network adapter is configured to receive a data packet from a network, and send the data packet to the load balancing apparatus, and the load balancing apparatus is configured to obtain a load condition of each general processor of the at least two general processors, select one general processor according to the load condition of each of the general processors, and send the data packet to the selected general processor.

It can be learnt from the foregoing technical solutions that, in the deep packet inspection method and device, and the coprocessor provided by the embodiments of the present invention, a general processor and a coprocessor cooperate to implement DPI; and a sub-coprocessor in the coprocessor may be designed specially for a DPI service to offload a DPI function from the general processor, which reduces resource occupation of the general processor, so that the general processor can process other value-added services. Moreover, a processor core is provided in the coprocessor and the sub-coprocessor runs under invocation of the processor core, so that intermediate state information can be retained and interactions between the processor core and the sub-coprocessor are all in-chip interactions, which avoids frequent interactions between the coprocessor and the general processor, thereby shortening a processing delay.

### BRIEF DESCRIPTION OF DRAWINGS

FIG. 1 is a schematic diagram of a deep packet inspection method in the prior art;
FIG. 2 is a schematic diagram of a deep packet inspection architecture according to an embodiment of the present invention;
FIG. 3 is a schematic diagram of an application scenario of deep packet inspection according to an embodiment of the present invention;
FIG. 4 is a flowchart of a first deep packet inspection method according to an embodiment of the present invention;
FIG. 5 is a flowchart of a second deep packet inspection method according to an embodiment of the present invention;
FIG. 6A and FIG. 6B are a flowchart of a deep packet inspection method according to an embodiment of the present invention;
FIG. 7A and FIG. 7B are a flowchart of another deep packet inspection method according to an embodiment of the present invention;
FIG. 8 is a flowchart of still another deep packet inspection method according to an embodiment of the present invention;
FIG. 9 is a schematic structural diagram of a first coprocessor according to an embodiment of the present invention;
FIG. 10 is a schematic structural diagram of a second coprocessor according to an embodiment of the present invention;
FIG. 11 is a schematic structural diagram of a general processor according to an embodiment of the present invention;
FIG. 12 is a schematic structural diagram of a first deep packet inspection device according to an embodiment of the present invention;
FIG. 13 is a schematic structural diagram of a second deep packet inspection device according to an embodiment of the present invention; and
FIG. 14 is a schematic structural diagram of a third deep packet inspection device according to an embodiment of the present invention.

### DESCRIPTION OF EMBODIMENTS

To make the objectives, technical solutions, and advantages of the embodiments of the present invention clearer, the following clearly describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

In order for a person skilled in the art to better understand technical solutions of the present invention, a deep packet inspection (Deep Packet Inspection, DPI for short) architecture of the embodiments of the present invention is described generally first, which is shown in FIG. 2.

In the embodiments of the present invention, functional modules for DPI processing tasks are divided into multiple layers (typically into four layers), where a higher layer processes more complex and general services, and a lower layer has a simpler and more dedicated algorithm.

These layers are implemented by two chips, which are a general processor and a DPI coprocessor respectively. In order to improve hardware acceleration performance, as many DPI-related tasks as possible may be performed by the DPI coprocessor. In this case, the general processor may perform more arithmetic-intensive tasks because the general processor is improved in terms of performance for this type of tasks and focuses on processing value-added services. The DPI coprocessor is responsible for implementing logic of a DPI service control layer, a DPI sub-service logical layer, and an algorithm engine layer. The DPI coprocessor further includes multiple sub-coprocessors internally, where each sub-coprocessor is configured to complete a specific DPI subservice; according to a difference in DPI subservice complexity, the sub-coprocessors may be specifically classified into a high-layer sub-coprocessor (such as a sub-coprocessor A in FIG. 2) and a low-layer sub-coprocessor (such as sub-coprocessors B, C, and D in FIG. 2), where the low-layer sub-coprocessor may be specifically an algorithm engine implemented by software or hardware and be configured to implement a dedicated function by using a specific algorithm, such as a string matching engine and a regular expression matching engine; and compared with the low-layer sub-coprocessor, the high-layer sub-coprocessor is configured to perform a more general DPI subservice, such as protocol identification and parsing. For example, the high-layer sub-coprocessor may be a logical or physical entity that integrates multiple sub-coprocessors and/or algorithm engine functions, and be configured to implement a more advanced and general DPI sub-function; moreover, the high-layer sub-coprocessor may invoke a low-layer sub-coprocessor to implement a required function, and sub-coprocessors of a same layer may also invoke each other to complete a function in a cooperative manner.

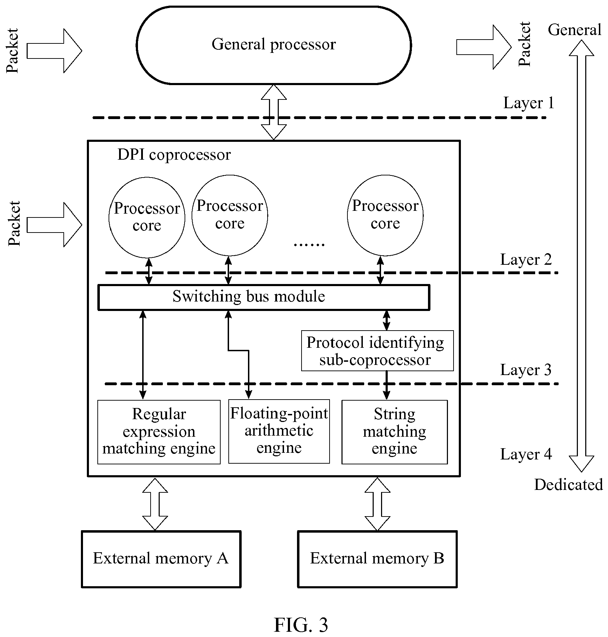

Specifically, in an application scenario, as shown in FIG. 3, tasks may be divided into the following layers:
Layer 1: Arithmetic-intensive layer, which is responsible for tasks that require a large amount of arithmetic processing, including: encryption and decryption, coding and decoding, and complex logic processing in DPI service logic; other non-DPI services such as value-added services; policy matching; packet action execution; and the like. In the embodiments of the present invention, a task of this layer is completed by a general processor.
Layer 2: DPI service control layer, which executes, by disposing a core in a DPI coprocessor, DPI service control logic, including DPI service-related control logic such as performing sequence control over steps of a DPI engine, condition and rule matching, cross-packet processing, and intermediate state storing. In the embodiments of the present invention, a task of this layer is completed by a processor core (core) in the DPI coprocessor.
Layer 3: DPI subservice logical layer, which is responsible for DPI-specific subservices that may be written permanently, for example, application protocol identification, protocol deep parsing, and data packet behavior feature analysis. In the embodiments of the present invention, a task of this layer is completed by a high-layer sub-coprocessor in the DPI coprocessor, for example, a protocol identifying sub-coprocessor for identifying an application layer protocol type of a data packet, a protocol parsing sub-coprocessor for performing deep parsing on a protocol, and the like.
Layer 4: Algorithm engine layer, which is responsible for algorithm engine tasks that are specifically optimized for DPI, for example, general regular expression matching, floating-point arithmetic, multi-mode string matching, single-mode string matching, behavior parameter arithmetic, and the like. A task of this layer is completed by a low-layer sub-coprocessor in the DPI coprocessor, for example, a regular expression matching engine, a floating-point arithmetic engine, a string matching engine, and the like.

It should be specially noted that, in the interior of the DPI coprocessor, that is, layer 2 to layer 4, an internal bus or a switching bus module is required for message and data interactions between these layered modules. However, an inter-chip interaction is performed between layer 1 and other layers, that is, between the general processor and the DPI coprocessor, which requires some standardized buses that are already available in the industry to perform the interaction, which typically may be, for example, a PCIE (Peripheral Component Interconnect Express) bus. A type of bus in use depends on an external interface provided by the general processor.

More preferably, in addition to the layered design architecture, in the embodiments of the present invention, an external memory may further be configured for the DPI coprocessor, so as to store a DPI intermediate state, thereby achieving better scalability and performance. In this case, when a task for which a state needs to be stored is processed, the task does not need to be completed by the general processor, and the DPI coprocessor may offload more processor resources thereof. In addition, the configured external memory may further store various feature field data structures and algorithm-specific data structures that need to be used during DPI processing. In this case, the DPI coprocessor may directly and rapidly read the data instead of reading it by using the general processor via a bus, which may achieve higher processing performance.

For example, an external memory A stores a data structure specific for a software core, including a flow table and a condition and rule, so that the DPI coprocessor can sense a state of a flow instead of performing processing based on a packet. An external memory B stores a data structure of various matching engines and sub-coprocessors, such as a DFA (Deterministic Finite Automaton, Deterministic Finite Automaton) state table, a single-mode matching algorithm ancillary data, and an algorithm data structure of a sub-coprocessor. It should be noted that the external memory A and the external memory B are merely divided logically, where the two may be located on a same physical memory.

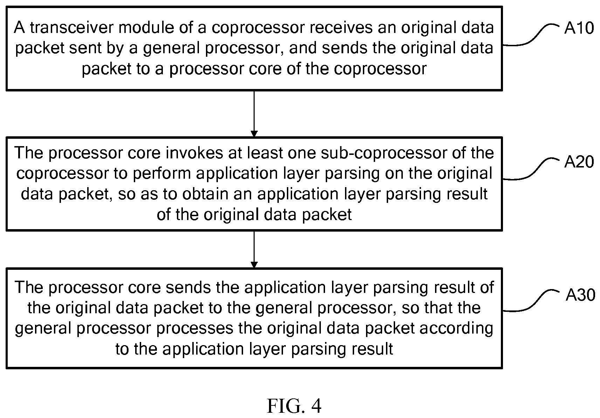

Based on the DPI architecture described above, an embodiment of the present invention provides a deep packet inspection method. FIG. 4 is a flowchart of a first deep packet inspection method according to the embodiment of the present invention. As shown in FIG. 4, the deep packet inspection method provided by this embodiment may be specifically applicable to a deep packet inspection DPI process of a network device, where the network device may be, for example, a router and a gateway. A deep packet inspection apparatus may be provided in the network device, where the deep packet inspection apparatus includes a general processor and a coprocessor, and the deep packet inspection method provided by this embodiment is performed by using the coprocessor.

The deep packet inspection method provided by this embodiment specifically includes the following steps:
Step A10: A transceiver module of a coprocessor receives an original data packet sent by a general processor, and sends the original data packet to a processor core of the coprocessor.
Step A20: The processor core invokes at least one sub-coprocessor of the coprocessor to perform application layer parsing on the original data packet, so as to obtain an application layer parsing result of the original data packet, where the application layer parsing result of the original data packet is used to indicate application layer information of the data packet, for example, an application layer protocol type, a service to which the data packet belongs, and the like, which is not listed one by one herein.
Step A30: The processor core sends the application layer parsing result of the original data packet to the general processor, so that the general processor processes the original data packet according to the application layer parsing result.

Specifically, a network device needs to implement network optimization and application traffic control by deeply analyzing a data packet in a received flow; the network device sends the data packet to the general processor by using a network adapter, and the general processor hands over a DPI-related task to a DPI coprocessor for execution

In this embodiment of the present invention, the coprocessor may be implemented by using an FPGA (Field Programmable Gate Array, field programmable gate array) or an ASIC (Application Specific Integrated Circuit, application-specific integrated circuit); one or more processor cores are deployed in the coprocessor; the transceiver module and multiple sub-coprocessors are further provided in the coprocessor; and the sub-coprocessor is implemented by using a hardware description language, where the hardware description language may be a VHDL (Very-High-Speed Integrated Circuit Hardware Description Language, very-high-speed integrated circuit hardware description language) or a Verilog HDL. The sub-coprocessor may be configured to perform application protocol identification, protocol parsing, and the like on the data packet, so as to improve service processing performance.

The general processor sends the original data packet to the transceiver module of the coprocessor; then, the transceiver module delivers the original data packet to the processor core in the coprocessor; the processor core of the coprocessor invokes the sub-coprocessor to perform application layer parsing on the original data packet, so as to obtain a parsing result; the processor core returns the parsing result to the general processor; then, the general processor processes the original data packet according to the parsing result, such as performing traffic statistics, acceleration, traffic limiting, blocking, and filtering. The general processor may create a flow table according to the parsing result, where the flow table records multiple flow table entries and processing instructions; the general processor matches the received data packet with the flow table entries, so as to determine a flow to which the data packet belongs and perform processing correspondingly.

In the deep packet inspection method provided by this embodiment, a general processor and a coprocessor cooperate to implement DPI; a sub-coprocessor in the coprocessor may be designed specially for a DPI service by dividing the coprocessor according to a finer granularity; and therefore, a DPI function is offloaded from the general processor, which reduces resource occupation of the general processor, so that the general processor can process other value-added services. Moreover, a processor core is provided in the coprocessor to perform DPI service control and the sub-coprocessor runs under invocation of the processor core, which greatly improves flexibility of service processing; and interactions between the processor core and the sub-coprocessor are all in-chip interactions, which avoids frequent interactions between the coprocessor and the general processor, thereby improving DPI performance.

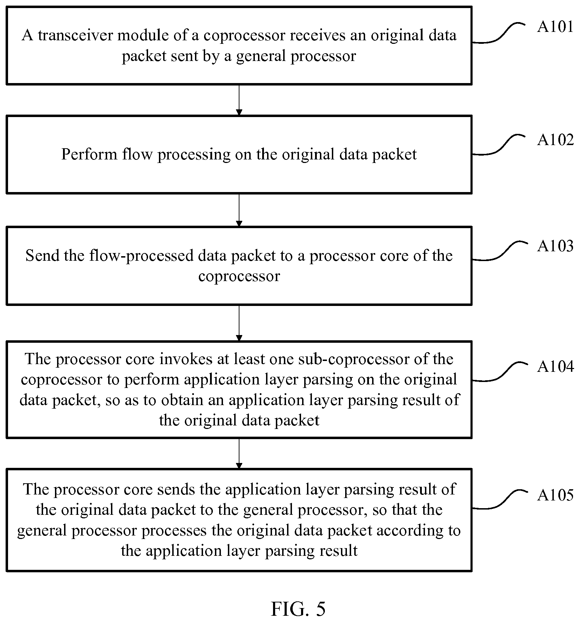

FIG. 5 is a flowchart of a second deep packet inspection method according to an embodiment of the present invention. As shown in FIG. 5, the deep packet inspection method according to this embodiment of the present invention includes the following steps:
Step A101: A transceiver module of a coprocessor receives an original data packet sent by a general processor.
Step A102: Perform flow processing on the original data packet.
   Specifically, the performing flow processing on the original data packet may include: performing fragmented IP packet reassembly processing and out-of-order TCP packet reordering processing on the original data packet. Further, the performing flow processing on the original data packet may further include: performing flow message ensuring sequence processing on the original data packet.
Step A103: Send the flow-processed data packet to a processor core of the coprocessor.

In an actual application process, the number of processor cores on the coprocessor may be set according to requirements of a DPI service; that is, there may be one or more processor cores. When at least two processor cores are provided in the coprocessor, the sending the original data packet to a processor core of the coprocessor specifically includes:
determining a load condition of each processor core of multiple processor cores that perform processing in a cooperative manner, selecting one processor core from the multiple processor cores according to a load-balancing policy, and sending the original data packet to the selected processor core.

Specifically, load conditions of all processor cores may be monitored, and a processor core is selected according to the load condition of each processor core in a process of delivering the data packet, and the data packet is sent to a processor core whose processing resources are relatively idle for processing.

Step A104: The processor core invokes at least one sub-coprocessor of the coprocessor to perform application layer parsing on the original data packet, so as to obtain an application layer parsing result of the original data packet.

In this embodiment, the processor core may specifically invoke the at least one sub-coprocessor by using a switching bus module of the coprocessor to perform application layer parsing on the original data packet.

Specifically, the switching bus module may be a Switch-Arbiter switching module, and communication between the processor core and various sub-coprocessors included in the processor core is implemented by using the switching bus module.

Step A105: The processor core sends the application layer parsing result of the original data packet to the general processor, so that the general processor processes the original data packet according to the application layer parsing result.

Specifically, in an embodiment, a result report processing module may further be provided in the coprocessor; the processor core may send the application layer parsing result of the original data packet to the result report processing module; the result report processing module encapsulates the application layer parsing result according to a preset format, and sends the encapsulated result to the general processor, where the preset format may be, for example, a TLV (Type Length Value) structure, and the TLV structure is a general data description format having a type, a length, and a value.

In this embodiment, an external memory may be provided for the coprocessor to use, where the memory may include a first memory and a second memory; and the first memory and the second memory may be two physically independent memories, or the first memory and the second memory may also be on a same memory physically but separate logically. The first memory is configured to stare a data structure required by the sub-coprocessor, and the second memory is configured to store data used by a DPI service control layer, such as flow intermediate state data, endpoint table data, port feature table, and condition and rule table.

Normally, a rule is used to describe a feature of a behavior for preventing a network attack or a protocol feature for application protocol identification; the condition and rule table in the second memory is used to record one or more rules. A rule normally includes a group of features; these features are used to describe details of a data packet, for example, a source/destination address of the data packet, a source/destination port, a transmission protocol type, some special strings included in load of the data packet, and whether the data packet is fragmented. The sub-coprocessor analyzes the data packet to obtain a feature matching result; the processor core matches a feature in each rule according to the feature matching result when determining an application layer protocol type, and if a data packet meets a rule, an application layer protocol type corresponding to the rule is an application layer protocol type of the data packet. A feature may be described in multiple manners, for example, a string, a regular expression, and a behavior feature; the feature matching result may be obtained in different manners for different features.

In this embodiment, according to a difference in DPI subservice complexity, the sub-coprocessors included in the coprocessor may be specifically classified into a high-layer sub-coprocessor (such as a protocol identifying sub-coprocessor and a protocol parsing sub-coprocessor) for performing a general DPI subservice and a low-layer sub-coprocessor for implementing a dedicated function, for example, an algorithm engine (such as a string matching engine and a regular expression matching engine) implemented by software or hardware, where the high-layer sub-coprocessor may invoke a low-layer sub-coprocessor to implement a required function, and sub-coprocessors of a same layer may also invoke each other to complete a function in a cooperative manner. On this basis, according to a difference in a type of sub-coprocessor, a specific implementation manner of the step A104 is also different:
(1) If the processor core invokes a high-layer sub-coprocessor, for example, a protocol identifying sub-coprocessor for identifying an application layer protocol type of the data packet, in a possible implementation manner, the protocol identifying sub-coprocessor may perform endpoint lookup on the original data packet under invocation of the processor core so as to obtain an endpoint lookup result, and return the endpoint lookup result to the processor core; the processor core determines the application layer protocol type of the original data packet at least according to the endpoint lookup result, and uses the determined application layer protocol type as the application layer parsing result of the original data packet.
   Specifically, a state machine is provided in the protocol identifying sub-coprocessor. If one or more records may be found in an endpoint table for several ones of a destination IP address, a source IP address, a destination port, and a source port of a flow in which a data packet is located, an application layer protocol type of the data packet may be directly obtained from the endpoint table without performing more steps. For example, an endpoint table record is that: destination IP address: 103.224.1.9, destination port: 443, application layer protocol type: gmail_webmail. If a data packet of a flow is sent to the 443 port of the destination IP address, a DPI processing result may be directly specified, indicating that an application layer protocol type of the data packet of the flow is gmail_webmail.
   In another possible implementation manner, the protocol identifying sub-coprocessor may invoke a low-layer sub-coprocessor, for example, a string matching engine under invocation of the processor, so as to help complete a corresponding function; the string matching engine performs string matching on the original data packet under invocation of the protocol identifying sub-coprocessor so as to obtain a feature matching result, and returns the feature matching result to the processor core; and the processor core determines an application layer protocol type of the original data packet at least according to the feature matching result, and uses the application layer protocol type as the application layer parsing result of the original data packet.
   Specifically, the string matching engine may be a single-mode string matching engine or a multi-mode string matching engine. The single-mode string matching engine may use a single-mode string matching algorithm, and the single-mode string matching algorithm may be a BM (Boyer Moore) algorithm. The multi-mode string matching engine may use a multi-mode string matching algorithm, and the multi-mode string matching algorithm may be an AC (Aho-Corasick) algorithm, a Wu-Manber algorithm, an ExB algorithm, or the like. In a process of multi-mode string matching, one or more string features may be found by scanning a target string once.
   When multi-mode string matching needs to be performed on a data packet, the protocol identifying sub-coprocessor invokes a multi-mode string matching engine, the multi-mode string matching engine scans the data packet and finds one or more string features in the data packet so as to obtain a feature matching result, and return the feature matching result to the processor core; the processor core then determines an application layer protocol type of the original data packet according to the feature matching result.
   In this embodiment, that the string matching engine perform string matching on the flow-processed data packet under invocation of the protocol identifying sub-coprocessor includes:
   that the string matching engine, under invocation of the protocol identifying sub-coprocessor, reads a string matching algorithm state table from the first memory, and performs string matching on the original data packet according to the string matching algorithm state table.

   Specifically, the first memory stores the string matching algorithm state table; when the string matching engine is a multi-mode string matching engine, the string matching algorithm state table is a multi-mode string matching algorithm state table; and when the string matching engine is a single-mode string matching engine, the string matching algorithm state table is a single-mode string matching algorithm state table. For example, the multi-mode string matching algorithm is an AC algorithm; the multi-mode string matching algorithm state table is an AC state table; and the multi-mode string matching engine may implement multi-mode string matching on the data packet according to the multi-mode string matching algorithm state table. The string matching engine does not perform a read or write operation directly on the first memory; a cache (Cache) is provided in the coprocessor, and a data interaction may be implemented between the cache and the first memory in a DMA (Direct Memory Access, direct memory access) manner. The provision of the cache can greatly reduce the number of accesses to the external memory, where most memory access requests may be completed by using the cache, which greatly improves system performance.
(2) If the processor core invokes a low-layer sub-coprocessor, for example, a regular expression matching engine specially used to perform regular expression matching, the regular expression matching engine performs regular expression matching on the original data packet under invocation of the processor core so as to obtain a feature matching result, and returns the feature matching result to the processor core; and the processor core determines the application layer protocol type of the original data packet at least according to the feature matching result, and uses the determined application layer protocol type as the application layer parsing result of the original data packet.

Specifically, the regular expression matching engine may use a regular expression matching algorithm, where the regular expression matching algorithm may be an NFA (Nondeterministic Finite Automaton, nondeterministic finite automaton) algorithm, a DFA (Deterministic Finite Automaton, deterministic finite automaton) algorithm, or the like; in a process of regular expression matching, a feature is not described by using a string, but is described by using a regular expression.

When regular expression matching needs to be performed on the data packet, the processor core may directly invoke the regular expression matching engine; the regular expression matching engine searches the data packet to obtain a feature matching result, and return the feature matching result to the processor core; the processor core then determines the application layer protocol type of the original data packet according to the feature matching result.

In this embodiment, that the regular expression matching engine performs regular expression matching on the original data packet under invocation of the processor core includes:
that the regular expression matching engine, under invocation of the processor core, reads a regular expression matching algorithm state table from the first memory, and performs regular expression matching on the original data packet according to the regular expression matching algorithm state table.

Specifically, the first memory stores a regular expression matching algorithm state table; for example, when the regular expression matching algorithm is the DFA algorithm, the regular expression matching algorithm state table is a DFA state table, and the regular expression matching engine may implement regular expression matching on the data packet according to the regular expression matching algorithm state table.

In another embodiment of the present invention, the processor core may further obtain the application layer protocol type of the original data packet by invoking a behavior feature statistics sub-coprocessor. Specifically, the behavior feature statistics sub-coprocessor performs behavior feature matching on the original data packet under invocation of the processor core so as to obtain a feature matching result, and returns the feature matching result to the processor core; and the processor core determines the application layer protocol type according to the feature matching result.

Specifically, a behavior feature model may be created in advance for different application protocols; when behavior feature matching needs to be performed on the data packet, the behavior feature statistics sub-coprocessor matches a behavior feature in the data packet to obtain the feature matching result, and return the feature matching result to the processor core; the processor core then determines the application layer protocol type of the original data packet according to the feature matching result. In this embodiment, that the processor core determines the application layer protocol type of the original data packet according to the feature matching result includes:
reading, by the processor core, a condition and rule table from the second memory by using the cache, and determining the application layer protocol type of the original data packet according to the feature matching result and the condition and rule table.

Specifically, the second memory stores the condition and rule table; the condition and rule table stores a correspondence between a rule and an application layer protocol type; the processor core matches the feature matching result with a feature in a rule, so as to determine whether the feature matching result meets the rule, and if the rule is met, may determine the application layer protocol type of the data packet. The processor core does not directly perform a read or write operation on the second memory; a cache (Cache) is provided in the coprocessor, and a data interaction may be implemented between the cache and the second memory in a DMA manner.

In another embodiment, a protocol parsing sub-coprocessor is further provided in the coprocessor, where a state machine may be provided in the protocol parsing sub-coprocessor. After the application layer protocol type carried by the data packet is learnt by performing application protocol identification on the data packet, if information in the data packet needs to be further learnt to facilitate processing or rule matching on various value-added services, deep parsing may further be performed on the data packet according to an application protocol format to extract related information, so as to obtain a parsing result.

Specifically, that the processor core invokes at least one sub-coprocessor of the coprocessor to perform application layer parsing on the original data packet, so as to obtain an application layer parsing result of the original data packet specifically includes:
invoking, by the processor core, a protocol identifying sub-coprocessor included in the coprocessor to identify an application layer protocol of the original data packet, so as to obtain an application layer protocol type of the original data packet; and
invoking, by the processor core, a protocol parsing sub-coprocessor included in the coprocessor to perform protocol parsing on the original data packet so as to obtain a parsing result, and using the parsing result and the application layer protocol type as the application layer parsing result of the original data packet.

In this embodiment, a URL matching engine may be further provided in the coprocessor; after the processor core invokes the protocol identifying sub-coprocessor of the coprocessor to identify the application protocol of the original data packet, if the processor core determines that the application layer protocol type is the Hypertext Transfer Protocol, a uniform resource locator URL matching engine of the coprocessor is invoked; and the URL matching engine performs URL matching on the original data packet under invocation of the processor core so as to obtain a URL matching result, and returns the URL matching result to the processor core, where the processing result further includes the URL matching result.

For example, if the processor core identifies that an application layer protocol type of a flow corresponding to a data packet is the Hypertext Transfer Protocol (HTTP), the URL matching engine may be invoked to further analyze the data packet. The URL matching engine may perform analysis to obtain a URL value of the data packet, so as to obtain a URL matching result. The coprocessor uses the URL matching result as a processing result and sends the processing result to the general processor, and the general processor may perform a URL-related network management job according to the URL matching result.

In an actual application, the general processor and the coprocessor of the deep packet inspection apparatus implement a DPI service in a cooperative manner, where functional modules in the coprocessor may be provided according to an actual DPI service requirement; the foregoing embodiment provides several implementation manners of the functional modules, but the present invention is not limited thereto. Moreover, processing procedures may also be different for different DPI services. A job of feature matching may also be completed by using the processor core of the coprocessor to obtain the feature matching result, and then the processor core determines the application layer protocol type according to the feature matching result. For example, one of the features of the HTTP protocol may be that a TCP port number is 80; a process of matching this port may be completed by the processor core of the coprocessor because not many computing resources are required.

In the deep packet inspection method provided by this embodiment, a general processor and a coprocessor cooperate to implement DPI; a sub-coprocessor in the coprocessor may be designed specially for a DPI service by dividing the coprocessor according to finer granularity; and therefore, a DPI function is offloaded from the general processor, which reduces resource occupation of the general processor, so that the general processor can process other value-added services. Moreover, a processor core is provided in the coprocessor to perform DPI service control and the sub-coprocessor runs under invocation of the processor core, which greatly improves flexibility of service processing; and an external memory is configured for the DPI coprocessor to store a DPI intermediate state, thereby achieving better scalability and performance. Because when a task for which a state needs to be stored is processed, the task does not need to be completed by the general processor, and the DPI coprocessor may offload more processor resources thereof. In addition, the external memory is configured for the DPI coprocessor to store various feature field data structures and algorithm-specific data structures that need to be used during DPI processing. In this case, the DPI coprocessor may directly and rapidly read the data instead of reading it by using the general processor via a bus, which can further improve processing performance.

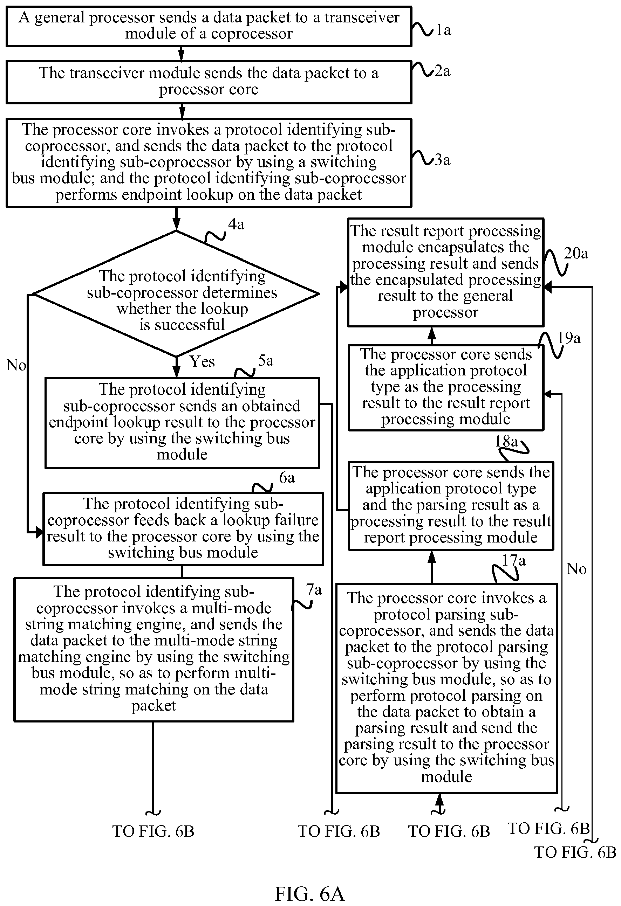

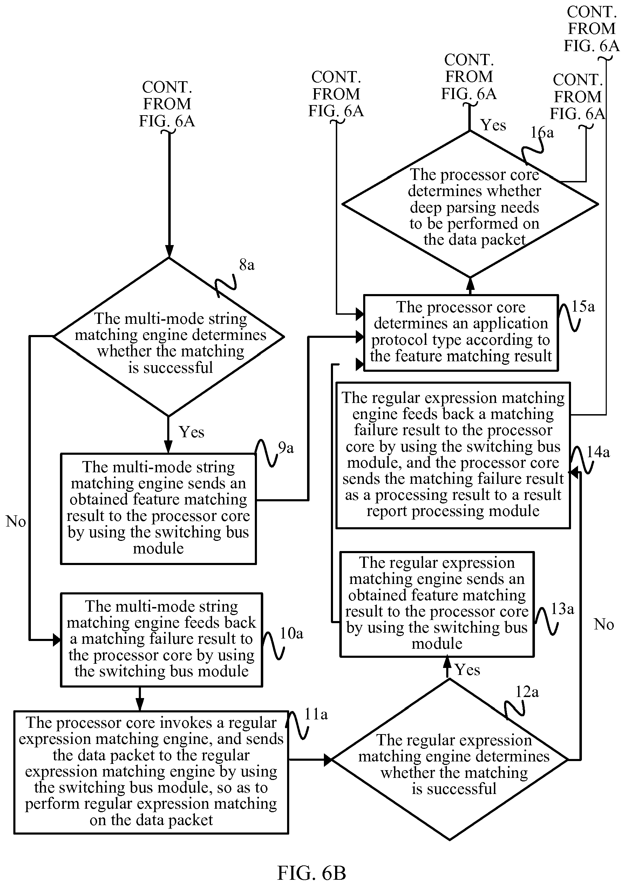

The following describes a specific process of performing deep packet inspection based on the DPI architecture according to the embodiments of the present invention with reference to specific examples. FIG. 6A and 6B are a flowchart of a deep packet inspection method according to an embodiment of the present invention. The following describes the deep packet inspection method provided by this embodiment with reference to FIG. 6A and 6B.
Step 1a: A general processor sends a data packet to a transceiver module of a coprocessor.
Step 2a: The transceiver module sends the data packet to a processor core.
Step 3a: The processor core invokes a protocol identifying sub-coprocessor, and sends the data packet to the protocol identifying sub-coprocessor by using a switching bus module; and the protocol identifying sub-coprocessor performs endpoint lookup on the data packet.
Step 4a: The protocol identifying sub-coprocessor determines whether the lookup is successful; and if yes, performs step 5a; if no, performs step 6a.
Step 5a: The protocol identifying sub-coprocessor sends an obtained endpoint lookup result to the processor core by using the switching bus module, and performs step 15a.
Step 6a: The protocol identifying sub-coprocessor feeds back a lookup failure result to the processor core by using the switching bus module.
Step 7a: The protocol identifying sub-coprocessor invokes a multi-mode string matching engine, and sends the data packet to the multi-mode string matching engine by using the switching bus module; and the multi-mode string matching engine performs multi-mode string matching on the data packet.
Step 8a: The multi-mode string matching engine determines whether the matching is successful; and if yes, performs step 9a; if no, performs step 10a.
Step 9a: The multi-mode string matching engine sends an obtained feature matching result to the processor core by using the switching bus module, and performs step 15a.
Step 10a: The multi-mode string matching engine feeds back a matching failure result to the processor core by using the switching bus module.
Step 11a: The processor core invokes a regular expression matching engine, and sends the data packet to the regular expression matching engine by using the switching bus module; and the regular expression matching engine performs regular expression matching on the data packet.
Step 12a: The regular expression matching engine determines whether the matching is successful; and if yes, performs step 13a; if no, performs step 14a.
Step 13a: The regular expression matching engine sends an obtained feature matching result to the processor core by using the switching bus module, and performs step 15a.
Step 14a: The regular expression matching engine feeds back a matching failure result to the processor core by using the switching bus module, and the processor core sends the matching failure result as a processing result to a result report processing module, and performs step 20a.
Step 15a: The processor core determines an application layer protocol type according to the feature matching result.
Step 16a: The processor core determines whether deep parsing needs to be performed on the data packet; and if yes, performs step 17a; if no, performs step 19a.
Step 17a: The processor core invokes a protocol parsing sub-coprocessor, and sends the data packet to the protocol parsing sub-coprocessor by using the switching bus module; and the protocol parsing sub-coprocessor performs protocol parsing on the data packet to obtain a parsing result, and sends the parsing result to the processor core by using the switching bus module.
Step 18a: The processor core sends the application layer protocol type and the parsing result as a processing result to the result report processing module, and performs step 20a.
Step 19a: The processor core sends the application layer protocol type as the processing result to the result report processing module.
Step 20a: The result report processing module encapsulates the processing result and then sends it to the general processor.

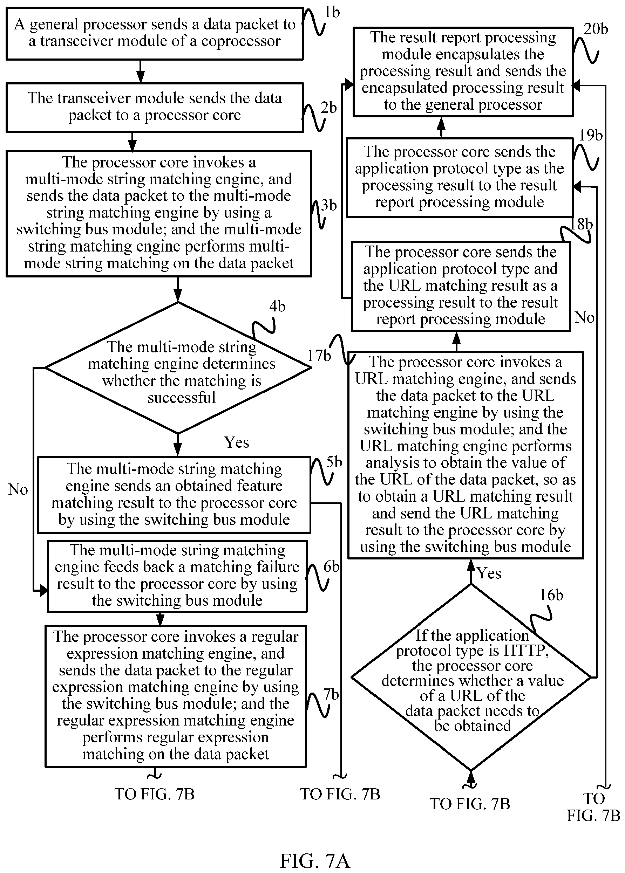

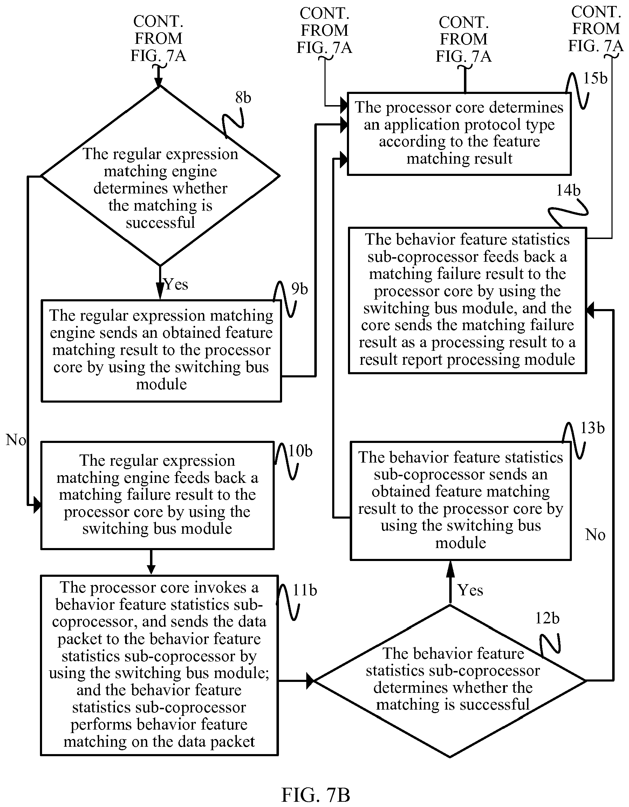

The following describes a specific process of performing deep packet inspection based on the DPI architecture according to the embodiments of the present invention with reference to another specific example. FIG. 7A and 7B are a flowchart of another deep packet inspection method according to an embodiment of the present invention. The following describes the deep packet inspection method provided by this embodiment with reference to FIG. 7A and 7B.
Step 1b: A general processor sends a data packet to a transceiver module of a coprocessor.
Step 2b: The transceiver module sends the data packet to a processor core.
Step 3b: The processor core invokes a multi-mode string matching engine, and sends the data packet to the multi-mode string matching engine by using a switching bus module; and the multi-mode string matching engine performs multi-mode string matching on the data packet.
Step 4b: The multi-mode string matching engine determines whether the matching is successful; and if yes, performs step 5b; if no, performs step 6b.
Step 5b: The multi-mode string matching engine sends an obtained feature matching result to the processor core by using the switching bus module, and performs step 15b.
Step 6b: The multi-mode string matching engine feeds back a matching failure result to the processor core by using the switching bus module.
Step 7b: The processor core invokes a regular expression matching engine, and sends the data packet to the regular expression matching engine by using the switching bus module; and the regular expression matching engine performs regular expression matching on the data packet.
Step 8b: The regular expression matching engine determines whether the matching is successful; and if yes, performs step 9b; if no, performs step 10b.
Step 9b: The regular expression matching engine sends an obtained feature matching result to the processor core by using the switching bus module, and performs step 15b.
Step 10b: The regular expression matching engine feeds back a matching failure result to the processor core by using the switching bus module.
Step 11b: The processor core invokes a behavior feature statistics sub-coprocessor, and sends the data packet to the behavior feature statistics sub-coprocessor by using the switching bus module; and the behavior feature statistics sub-coprocessor performs behavior feature matching on the data packet.
Step 12b: The behavior feature statistics sub-coprocessor determines whether the matching is successful; and if yes, performs step 13b; if no, performs step 14b.
Step 13b: The behavior feature statistics sub-coprocessor sends an obtained feature matching result to the processor core by using the switching bus module, and performs step 15b.
Step 14b: The behavior feature statistics sub-coprocessor feeds back a matching failure result to the processor core by using the switching bus module, and the processor core sends the matching failure result as a processing result to a result report processing module, and performs step 20b.
Step 15b: The processor core determines an application layer protocol type according to the feature matching result.
Step 16b: If the application layer protocol type is HTTP, the processor core determines whether a value of a URL of the data packet needs to be obtained; and if yes, performs step 17b; if no, performs step 19b.
Step 17b: The processor core invokes a URL matching engine, and sends the data packet to the URL matching engine by using the switching bus module; and the URL matching engine performs analysis to obtain the value of the URL of the data packet so as to obtain a URL matching result, and sends the URL matching result to the processor core by using the switching bus module.
Step 18b: The processor core sends the application layer protocol type and the URL matching result as a processing result to the result report processing module.
Step 19b: The processor core sends the application layer protocol type as the processing result to the result report processing module.
Step 20b: The result report processing module encapsulates the processing result and then sends it to the general processor.

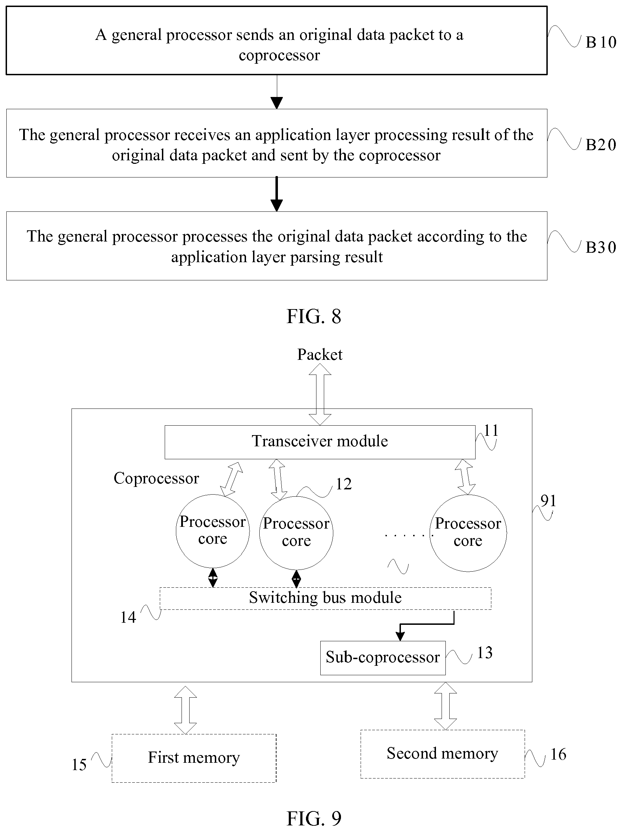

FIG. 8 is a flowchart of another deep packet inspection method according to an embodiment of the present invention. As shown in FIG. 8, the deep packet inspection method provided by this embodiment may be implemented in cooperation with the method provided by the embodiment shown in FIG. 4, where a specific implementation process is not described in detail herein again. The deep packet inspection method provided by this embodiment is performed by using a general processor; the method specifically includes the following steps:
Step B10: A general processor sends an original data packet to a coprocessor.
Step B20: The general processor receives an application layer parsing result of the original data packet and sent by the coprocessor, where the application layer parsing result is obtained by a processor core of the coprocessor by invoking at least one sub-coprocessor of the coprocessor to perform application layer parsing on the original data packet, and the application layer parsing result is used to indicate application layer information of the original data packet, for example, an application layer protocol type, a service to which the original data packet belongs, and the like, which is not described in detail herein again.
Step B30: The general processor processes the original data packet at least according to the application layer parsing result.

Specifically, when a network device needs to implement network optimization and application traffic control by deeply analyzing a data packet in a received flow, a network adapter of the network device sends the flow to the general processor. The general processor sends the original data packet to the coprocessor; the coprocessor performs application layer parsing on the original data packet, so as to obtain the application layer parsing result, where the application layer parsing result may include an application layer protocol type, a protocol deep parsing result, a URL matching result, and the like, and returns the application layer parsing result to the general processor; the general processor processes the original data packet according to the application layer parsing result, such as performing traffic statistics, acceleration, traffic limiting, blocking, and filtering.

In the deep packet inspection method provided by this embodiment, a general processor sends an original data packet to a coprocessor, receives a processing result sent by the coprocessor, and processes the original data packet according to the processing result. The general processor and the coprocessor cooperate to implement DPI; and a sub-coprocessor in the coprocessor may be designed specially for a DPI service to offload a DPI function from the general processor, which reduces resource occupation of the general processor, so that the general processor can process other value-added services. Moreover, a processor core is provided in the coprocessor and the sub-coprocessor runs under invocation of the processor core an interaction between the processor core and the sub-coprocessor may also be an in-chip interaction, which avoids frequent interactions between the coprocessor and the general processor, thereby increasing a running speed.

In an embodiment, that the general processor processes the original data packet according to the application layer parsing result specifically includes:
if the general processor determines, according to the application layer parsing result of the original data packet, that the original data packet is an encrypted data packet, decrypting the original data packet.

Specifically, the general processor sends the original data packet to the coprocessor; when identifying that the original data packet is encrypted, the coprocessor returns a processing result for indicating that the original data packet is an encrypted data packet to the general processor; accordingly, the general processor may decrypt the original data packet, and then send the decrypted original data packet to the coprocessor, where reference may be made to the description of the foregoing embodiment for a process in which the coprocessor processes the original data packet.

In an actual application, implementation of an operation, such as decryption processing, is complex; a task that the coprocessor cannot perform may be implemented by the general processor. Certainly, when a decrypting module is provided in the coprocessor, the coprocessor may decrypt the original data packet by itself.

In another embodiment, that the general processor processes the original data packet according to the application layer parsing result may include:
if the general processor determines, according to the application layer parsing result of the original data packet, a service type of the flow to which the original data packet belongs, performing traffic statistics, charging, or transmission acceleration on the flow according to the service type.

Specifically, an operator wants to charge for VoIP (Voice over Internet Protocol) traffic; the general processor may, when determining, according to the application layer parsing result of the original data packet, that a data flow in which the original data packet is located is a data flow of a VoIP telephone using the Skype protocol, perform traffic statistics on the flow, thereby implementing charging for the VoIP telephone service.

When a user wants to perform traffic acceleration for some applications, for example, an online game, the general processor performs acceleration on the flow when determining, according to the application layer parsing result, that the flow to which the original data packet belongs is used for an online game service, so as to ensure a transmission speed of the flow.

When a user wants to block some applications, the general processor may block the flow when determining, according to the application layer parsing result, that a flow to which the original data packet belongs is used for a specific application program.

Preferably, in another embodiment, the application layer parsing result of the original data packet includes an application layer protocol type of the original data packet and a URL matching result, where the application layer protocol type of the original data packet may be obtained by the processor core of the coprocessor by invoking the protocol identifying sub-coprocessor of the coprocessor to perform protocol identification on the original data packet; further, when determining that the application layer protocol type of the original data packet is the Hypertext Transfer Protocol HTTP, the processor core of the coprocessor may further invoke the uniform resource locator URL matching engine of the coprocessor to perform URL matching on the original data packet so as to obtain a URL matching result, and send the URL matching result to the general processor; correspondingly, after receiving the URL matching result sent by the coprocessor, the general processor determines, according to the application layer protocol type and the URL matching result, whether the flow to which the original data packet belongs is used to access a restricted website, and if the flow to which the original data packet belongs is used to access a restricted website, blocks the flow.

Specifically, a user wants to enable a green Internet access service to prevent a teenager from accessing an unhealthy website; the general processor blocks a flow when determining, according to an application layer protocol type which is HTTP in a processing result and according to a URL matching result, that access to a website directed to by the URL is restricted, so as to prevent the teenager from accessing the unhealthy website.

FIG. 9 is a schematic structural diagram of a coprocessor according to an embodiment of the present invention. As shown in FIG. 9, the coprocessor 91 provided by this embodiment may specifically implement the steps of the deep packet inspection method that is provided by any embodiment of the present invention and applicable to a coprocessor, where a specific implementation process is not described in detail herein again. The coprocessor 91 provided by this embodiment specifically includes a transceiver module 11, a processor core 12, and a sub-coprocessor 13.

The transceiver module 11 is configured to receive an original data packet sent by a general processor, and send the original data packet to the processor core 12.

The processor core 12 is configured to invoke the sub-coprocessor 13 of the coprocessor 91 to perform application protocol identification on the original data packet so as to generate a processing result, and send the processing result to the general processor.

The sub-coprocessor 13 is configured to perform application protocol identification on the original data packet under invocation of the processor core 12.

The coprocessor 91 may be implemented by using an FPGA or an ASIC; one or more processor cores 12 are deployed in the coprocessor 91; the transceiver module 11 and the sub-coprocessor 13 are further provided in the coprocessor 91; and the sub-coprocessor 13 is implemented by using a hardware description language, where the hardware description language may be the VHDL or the Verilog HDL. The sub-coprocessor 13 is specially configured to perform application protocol identification on the data packet, thereby improving a service processing effect.

In this embodiment, the coprocessor 91 may further include a switching bus module 14. Correspondingly, the processor core 12 may invoke the sub-coprocessor 13 by using the switching bus module 14 of the coprocessor 91.

Further, a first memory 15 and a second memory 16 may further be configured for functional modules of the coprocessor 91, where the first memory stores a data structure specific for a software core, including a flow table and a condition and rule, so that the DPI coprocessor can sense a state of a flow instead of performing processing based on a packet. The second memory stores a data structure of various matching engines and sub-coprocessors, such as a DFA state table, single-mode matching algorithm ancillary data, and an algorithm data structure of a sub-coprocessor. It should be noted that the first memory and the second memory are merely divided logically, where the two may be located on a same physical memory.

In the coprocessor 91 provided by this embodiment, a transceiver module 11 receives an original data packet sent by a general processor, and sends the original data packet to a processor core 12 of the coprocessor 91; the processor core 12 invokes a sub-coprocessor 13 of the coprocessor 91 to perform application protocol identification on the original data packet, so as to generate a processing result; and the processor core 12 sends the processing result to the general processor, so that the general processor processes the original data packet according to the processing result. The general processor and the coprocessor 91 cooperate to implement DPI and the sub-coprocessor 13 in the coprocessor 91 may be designed specially for a DPI service to offload a DPI function from the general processor, which reduces resource occupation of the general processor, so that the general processor can process other value-added services. Moreover, the processor core 12 is provided in the coprocessor 91 and the sub-coprocessor 13 runs under invocation of the processor core 12, so that intermediate state information can be retained and interactions between the processor core 12 and the sub-coprocessor 13 are all in-chip interactions, which avoids frequent interactions between the coprocessor 91 and the general processor, thereby increasing a running speed.

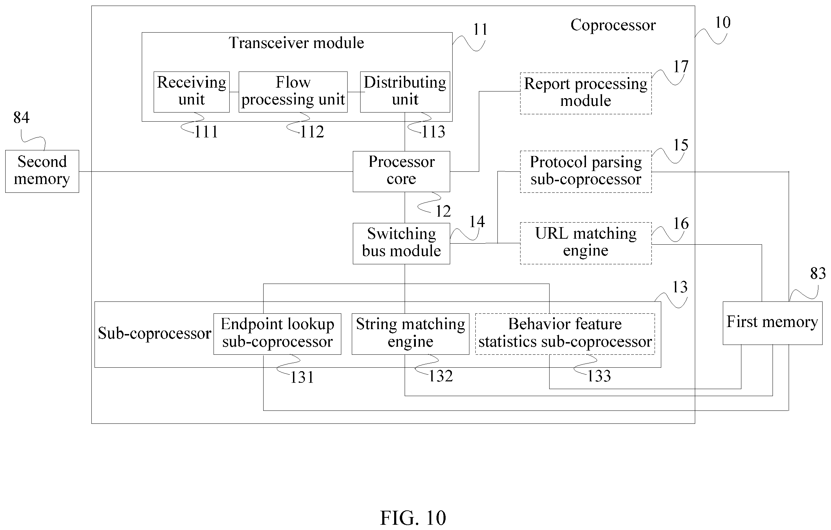

FIG. 10 is a schematic structural diagram of another coprocessor 10 according to an embodiment of the present invention. As shown in FIG. 10, in this embodiment, the transceiver module 11 may include a receiving unit 111, a flow processing unit 112, and a distributing unit 113. The receiving unit 111 is configured to receive an original data packet sent by a general processor; the flow processing unit 112 is configured to perform flow processing on the original data packet; and the distributing unit 113 is configured to send the flow-processed data packet to a processor core 12; specifically, the flow processing unit 112 is specifically configured to perform fragmented IP packet reassembly processing and out-of-order TCP packet reordering processing on the original data packet; when a coprocessor 10 includes multiple processor cores, the distributing unit 113 is specifically configured to determine a load condition of each processor core of at least two processor cores, select one processor core from the at least two processor cores according to the load condition of each of the processor cores, and send the flow-processed data packet to the selected processor core; correspondingly, the selected processor core is configured to invoke the sub-coprocessor 13 to perform application layer parsing on the flow-processed data packet, for example, application protocol identification.

In this embodiment, the coprocessor 10 may further include a switching bus module 14. Correspondingly, the processor core 12 specifically invokes the sub-coprocessor 13 by using the switching bus module 14 of the coprocessor 10.

In an embodiment, the sub-coprocessor 13 may be an endpoint lookup sub-coprocessor 131; in this case, the sub-coprocessor 13 is specifically configured to perform endpoint lookup on the original data packet under invocation of the processor core 12 so as to obtain an endpoint lookup result, and return the endpoint lookup result to the processor core 12. The processor core 12 is specifically configured to determine an application layer protocol type of the original data packet according to the feature matching result, and use the determined application layer protocol type as the application layer parsing result of the original data packet and send the application layer parsing result to the general processor.

In another embodiment, as shown in FIG. 10, the sub-coprocessor 13 includes a protocol identifying sub-coprocessor and a string matching engine 132. The protocol identifying sub-coprocessor is configured to invoke the string matching engine 132 after the processor core invokes the sub-coprocessor 13; and the string matching engine 132 is configured to perform string matching on the original data packet under invocation of the protocol identifying sub-coprocessor so as to obtain a feature matching result, and return the feature matching result to the processor core.

Correspondingly, the processor core 12 is specifically configured to determine an application layer protocol type of the original data packet at least according to the feature matching result, and use the determined application layer protocol type as the application layer parsing result of the original data packet and send the application layer parsing result to the general processor.

In another embodiment, the sub-coprocessor 13 may also be a regular expression matching engine. The regular expression matching engine is configured to perform regular expression matching on the original data packet under invocation of the processor core 12 so as to obtain a feature matching result, and return the feature matching result to the processor core 12. The processor core 12 is specifically configured to determine an application layer protocol type of the original data packet according to the feature matching result, and use the determined application layer protocol type as the application layer parsing result of the original data packet and send the application layer parsing result to the general processor.

Preferably, the sub-coprocessor 13 may further include a behavior feature statistics sub-coprocessor 133, configured to perform behavior feature matching on the original data packet under invocation of the processor core 12 so as to obtain a feature matching result, and return the feature matching result to the processor core 12. The processor core 12 is specifically configured to determine an application layer protocol type of the original data packet according to the feature matching result, and use the determined application layer protocol type as the application layer parsing result of the original data packet and send the application layer parsing result to the general processor.

Preferably, in this embodiment, the coprocessor 10 may further include a protocol parsing sub-coprocessor 15, configured to perform protocol parsing on the original data packet under invocation of the processor core 12 so as to obtain a parsing result, and return the parsing result to the processor core 12; and correspondingly, the processor core 12 is specifically configured to send the application layer protocol type of the original data packet and the parsing result that is obtained by the protocol parsing sub-coprocessor 15 as the application layer parsing result of the original data packet to the general processor.

Preferably, in this embodiment, the coprocessor 10 may further include a uniform resource locator URL matching engine 16, configured to perform URL matching on the original data packet under invocation of the processor core 12 so as to obtain a URL matching result, and return the URL matching result to the processor core 12; correspondingly, the processor core 12 is specifically configured to send the application layer protocol type of the original data packet and the URL matching result as the application layer parsing result of the original data packet to the general processor.

Preferably, in this embodiment, the coprocessor 10 further includes a result report processing module 17. The processor core 12 is specifically configured to send the application layer parsing result of the original data packet to the result report processing module 17; and the result report processing module 17 is configured to encapsulate the application layer parsing result according to a preset format, and send the encapsulated application layer parsing result to the general processor.

In an actual application, the general processor and the coprocessor 91 of a DPI device implement a DPI service in a cooperative manner, where functional modules in the coprocessor 91 may be provided according to an actual DPI service requirement and logic of the processor core 12 may also be programmed according to an actual DPI service requirement. The foregoing embodiment provides several implementation manners of the functional modules, but the present invention is not limited thereto.

The DPI device may be divided into multiple layers, for example, into four layers from top to bottom: an arithmetic-intensive layer, a DPI service control layer, a DPI subservice logic layer, and an algorithm engine layer. A higher layer processes more complex and general services, and a lower layer has a simpler and more dedicated algorithm. In order to improve hardware acceleration performance, as many DPI-related tasks as possible should be performed by the coprocessor. In this case, the general processor may perform more arithmetic-intensive tasks. The coprocessor is responsible for implementing logic of a DPI service control layer, a DPI subservice logical layer, and an algorithm engine layer.

In principle, a high-layer module invokes a low-layer module to implement a required function. Certainly, modules of a same layer may also invoke each other to complete a function in a cooperative manner. The layers are described in detail as follows:
Layer 1: Arithmetic-intensive layer, which is responsible for a task that requires a large amount of arithmetic processing, including: encryption and decryption, coding and decoding, and complex logic processing in DPI service logic; and other non-DPI service, such as a value-added service; policy matching; packet action execution, and the like.
Layer 2: DPI service control layer, which executes, by disposing a processor core in a coprocessor, DPI service control logic, including DPI service-related control logic such as performing sequence control over steps of a DPI engine, condition and rule matching, cross-packet processing, and intermediate state storing.
Layer 3: DPI subservice logical layer, which is responsible for a DPI-specific subservice that may be fixed, for example, a protocol identifying sub-coprocessor, a protocol parsing sub-coprocessor, and a behavior feature statistics sub-coprocessor.
Layer 4: Algorithm engine layer, which is responsible for an algorithm engine task that is specifically optimized for DPI, for example, a regular expression matching engine, a floating point expression engine, a multi-mode string matching algorithm engine, a single-mode string matching algorithm engine, and a behavior parameter arithmetic engine, and the like.

It should be specially noted that, in the interior of the coprocessor, that is, the layer 2 to the layer 4, a switching bus module is configured to perform message and data interactions between these layered modules. However, an inter-chip interaction is performed between the layer 1 and other layers, that is, between the general processor and the coprocessor, which may be implemented by using a standardized bus, for example, a PCIE. A type of bus may be set according to an external interface provided by the general processor.

In addition to the modules that may be assigned to corresponding layers, there are also some modules for ancillary processing, where these modules are independent of the layers and are implemented by using fixed logic, for example, the transceiver module, the result report processing module, a memory read and write module, a cache, and the like in the coprocessor 91.

In an actual implementation process, the general processor may further determine in advance, according to a service type, whether the general processor itself or the coprocessor perform processing; if the service type corresponds to a processing algorithm that is of a high layer and is complex, the general processor performs processing, and if the service type is a DPI-related service, the coprocessor perform processing.

In addition to the layered design architecture, this embodiment of the present invention further proposes to configure an external memory for the coprocessor, so as to store a DPI intermediate state, thereby achieving better scalability and performance, such as a first memory 83 and a second memory 84 in FIG. 10. In this case, when a task for which a state needs to be stored is processed, the task does not need to be completed by the general processor, and the coprocessor may offload more processor resources thereof. In addition, the configured external memory may further store various feature field data structures and algorithm-specific data structures that need to be used during DPI processing. In this case, the coprocessor may directly and rapidly read the data instead of reading it by using the general processor via a bus, which may achieve higher processing performance.

In this embodiment, the string matching engine 132 is specifically configured to, under invocation of the processor core 12, read a string matching algorithm state table from the first memory 83, and perform string matching on the original data packet according to the string matching algorithm state table to obtain a feature matching result, where the first memory 83 is configured to store the string matching algorithm state table.

Specifically, a first memory 83 is configured for the functional modules of the coprocessor 10; the first memory 83 stores the string matching algorithm state table; when the string matching engine 132 is a multi-mode string matching engine, the string matching algorithm state table is a multi-mode string matching algorithm state table; and when the string matching engine 132 is a single-mode string matching engine, the string matching algorithm state table is a single-mode string matching algorithm state table. For example, the multi-mode string matching algorithm is an AC algorithm; the multi-mode string matching algorithm state table is an AC state table; and the multi-mode string matching engine may implement multi-mode string matching on the data packet according to the multi-mode string matching algorithm state table. The multi-mode string matching engine does not perform a read or write operation directly on the first memory 83; and the coprocessor 10 is provided with a cache and accessing the first memory 83 by using the cache.

In this embodiment, the regular expression matching engine is specifically configured to, under invocation of the processor core 12, read a regular expression matching algorithm state table from the first memory 83, and perform regular expression matching on the original data packet according to the regular expression matching algorithm state table, where the first memory 83 is configured to store the regular expression matching algorithm state table.

Specifically, the first memory 83 stores a regular expression matching algorithm state table; for example, when the regular expression matching algorithm is the DFA algorithm, the regular expression matching algorithm state table is a DFA state table, and the regular expression matching engine may implement regular expression matching on the data packet according to the regular expression matching algorithm state table. The regular expression matching engine does not perform a read or write operation directly on the first memory 83; and the coprocessor 10 is provided with a cache and accesses the first memory 83 by using the cache.

In this embodiment, after the string matching engine 132 performs the string matching on the original data packet according to the string matching algorithm state table in the first memory 83 to obtain the feature matching result, the processor core 12 is configured to read a condition and rule data structure from the second memory 84, and determine the application layer protocol type of the original data packet according to the feature matching result and the condition and rule data structure, where the second memory 84 is configured to store the condition and rule data structure.

Specifically, the second memory 84 is configured for the processor core 12 of the coprocessor 10; the second memory 84 stores the condition and rule data structure, where the condition and rule data structure is used to store a correspondence between a service rule and an application layer protocol type; the processor core 12 searches the condition and rule data structure of the second memory according to the feature matching result obtained by the string matching engine to obtain the application layer protocol type of the original data packet. It is allowed that the processor core 12 does not perform a read or write operation directly on the second memory 84; and the coprocessor 10 is provided with a cache and accesses the second memory 84 by using the cache.

In this embodiment, the first memory 83 and the second memory 84 may be of a double bank mode.

Specifically, the first memory 83 and the second memory 84 may be designed to be a double bank (Double Bank) mode, where the first bank is used to store a data structure that is currently used and is referred to as a current bank, and the second bank is used to store an upgraded data structure and is referred to as an upgrade bank. In a running process of a system, the coprocessor 10 accesses data in the current bank to implement service processing. In this process, when data in the memory needs to be upgraded, to-be-upgraded data may be loaded into the upgrade bank; the upgrade process does not affect the access of the coprocessor 10 to the current bank of the memory; new data is switched to a system bank after being loaded; in this case, the first bank is used as the system bank and the second bank is used as the current bank; similarly, the first bank and the second bank are alternately used to store upgrade data, which ensures that the upgrade is valid without interrupting a current service. It is worth noting that, in an actual application, after the system bank is switched, because some service traffic is still in a processing process, the service traffic that is still in a processing process cannot be forcibly switched to the new system bank. In this case, new service traffic is processed by using data of the new system bank, and existing service traffic continues to be processed by using the original system bank. The original system bank is set to an inactive state only after all existing service traffic is processed completely. This achieves system upgrade without interrupting the current service.

For example, an original identifying feature of the BitTorrent protocol is "Bttorrent"; however, because the BitTorrent software is upgraded, a new feature is "XBttorrent"; therefore, a knowledge base for DPI identification needs to be updated, where a corresponding data structure of the coprocessor 10 of the present invention is a certain string feature stored in an AC state table. Therefore, a newly compiled feature data structure needs to be loaded into the upgrade bank. In a loading process, the multi-mode string matching engine still uses the current bank. After the loading is complete, the current bank and the system bank are switched. The multi-mode string matching engine may read a new AC state table.

An actual application process mainly includes a compiling part and a running part.

The compiling part: a feature compiler, a parsing sub-processor compiler, a result template compiler, and a policy compiler.

In an actual application, a compiler mainly includes:
a. front-end compilers: feature compiler, parsing sub-processor compiler, matching rule compiler, and the like; and
b. background compilers: regular expression compiler, single-mode string algorithm compiler, multi-mode string algorithm compiler, and the like.

A main function of a front-end compiler includes: classifying rules (for example, application protocol identification, IPS/IDS, and URL filtering) of various DPI services into rules that may be used by the coprocessor according to the present invention, that is, a regular expression, a string, a value, and the like; generating a data structure in the second memory, that is, a condition and rule data structure, and the like; compiling software logic high-level programming language code of the processor core in the coprocessor into an instruction that may be executed by the processor core of the coprocessor; and compiling various DPI service data structures used by the general processor, that is, a data structure mentioned above for supporting decryption identification and algorithm identification.

A main function of a background compiler includes: compiling a data structure used by a lowest-layer algorithm engine module in various coprocessors, that is, the data structure in the first memory, which is exemplified in the foregoing description and is not described in detail herein again.

In addition to the two types of compilers, a module of the compiling part further includes a coprocessor drive program, which is responsible for loading various compiled data structures into the first memory and the second memory of the coprocessor and an in-chip memory of the coprocessor (for example, a logic instruction of the processor core is stored in an in-chip memory of a processor).

The running part: hardware modules of a configuration API, a DPI processing API, a drive program, firmware of a processor core of a DPI service control layer, a DPI subservice processing layer (parsing character processor, a URL filtering module, and a policy matching module), and an algorithm engine layer (single-mode string matching engine, a regular expression matching engine, and a multi-mode string matching engine).

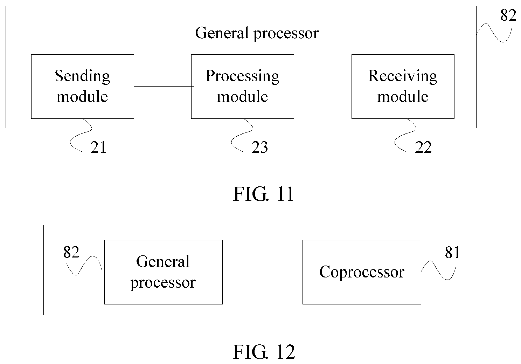

FIG. 11 is a schematic structural diagram of a general processor according to an embodiment of the present invention. As shown in FIG. 11, the general processor 82 provided by this embodiment may specifically implement the steps of the deep packet inspection method that is provided by any embodiment of the present invention and applicable to a general processor, where a specific implementation process is not described in detail herein again. The general processor provided by this embodiment includes a sending module 21, a transceiver module 22, and a processing module 23.

The sending module 21 is configured to send an original data packet to a coprocessor.

The receiving module 22 is configured to receive an application layer parsing result of the original data packet and sent by the coprocessor, where the application layer parsing result is obtained by a processor core of the coprocessor by invoking at least one sub-coprocessor of the coprocessor to perform application layer parsing on the original data packet, and the application layer parsing result is used to indicate application layer information of the original data packet.

The processing module 23 is configured to process the original data packet at least according to the application layer parsing result.

In the general processor provided by this embodiment, the general processor sends an original data packet to a coprocessor, receives a processing result sent by the coprocessor, and processes the original data packet according to the processing result. The general processor and the coprocessor cooperate to implement DPI; and a sub-coprocessor in the coprocessor may be designed specially for a DPI service to offload a DPI function from the general processor, which reduces resource occupation of the general processor, so that the general processor can process other value-added services. Moreover, a processor core is provided in the coprocessor and the sub-coprocessor runs under invocation of the processor core, so that intermediate state information can be retained and interactions between the processor core and the sub-coprocessor are all in-chip interactions, which avoids frequent interactions between the coprocessor and the general processor, thereby increasing a running speed.

In an embodiment, the processing module 23 is specifically configured to decrypt the original data packet if it is identified, according to the application layer parsing result of the original data packet, that the original data packet is an encrypted data packet.

In another embodiment, the processing module 23 is specifically configured to determine, according to the application layer parsing result of the original data packet, a service type of a flow to which the original data packet belongs, and perform, according to the service type, traffic statistics, charging, or transmission acceleration on the flow to which the original data packet belongs.

In another embodiment, the application layer parsing result of the original data packet includes an application layer protocol type of the original data packet and a URL matching result, where the application layer protocol type of the original data packet may be obtained by the processor core of the coprocessor by invoking the protocol identifying sub-coprocessor of the coprocessor to perform protocol identification on the original data packet; further, when determining that the application layer protocol type of the original data packet is the HyperText Transfer Protocol HTTP, the processor core of the coprocessor may further invoke the uniform resource locator URL matching engine of the coprocessor to perform URL matching on the original data packet so as to obtain a URL matching result, and send the URL matching result to the general processor; correspondingly, after receiving the URL matching result sent by the coprocessor, the general processor determines, according to the application layer protocol type and the URL matching result, whether the flow to which the original data packet belongs is used to access a restricted website, and if the flow to which the original data packet belongs is used to access a restricted website, blocks the flow.

FIG. 12 is a schematic structural diagram of a first DPI device according to an embodiment of the present invention. As shown in FIG. 12, the DPI device provided by this embodiment includes the coprocessor 81 provided by any embodiment of the present invention and the general processor 82 provided by any embodiment of the present invention.

In the DPI device provided by this embodiment, a general processor 82 and a coprocessor 81 cooperate to implement DPI; a sub-coprocessor in the coprocessor 81 may be designed specially for a DPI service; a DPI function is offloaded from the general processor 82, which reduces resource occupation of the general processor 82, so that the general processor 82 may process other value-added services. Moreover, a processor core is provided in the coprocessor 81 and the sub-coprocessor runs under invocation of the processor core intermediate state information may be retained; and all interactions between the processor core and the sub-coprocessor are in-chip interactions, which avoids frequent interactions between the coprocessor 81 and the general processor 82, thereby increasing a running speed.

In an embodiment, there is one general processor included in the DPI device. In an actual application, one coprocessor may also implement a DPI service in cooperation with one or more general processors.

In another embodiment, there are at least two general processors included in the DPI device; the DPI device further includes a network adapter and a load balancing apparatus.

The network adapter is configured to receive a data packet from a network, and send the data packet to the load balancing apparatus; and
the load balancing apparatus is configured to obtain a load condition of each general processor of the at least two general processors, select one general processor according to the load condition of each of the general processors, and send the data packet to the selected general processor.

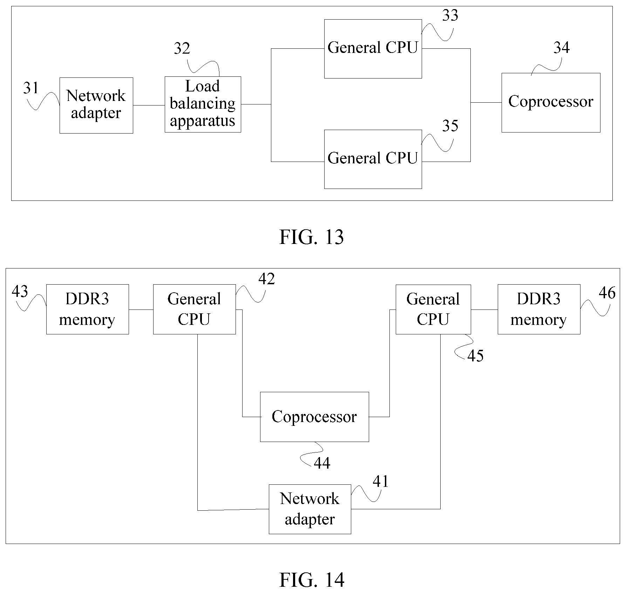

FIG. 13 is a schematic structural diagram of a second DPI device according to an embodiment of the present invention. As shown in FIG. 13, using an example that two general CPUs (33 and 35 in FIG. 13) are provided in the DPI device, a network adapter 31 and a load balancing apparatus 32 are further provided in the DPI device. The network adapter 31 receives a data packet sent by another device in a network, and directly sends, by using the load balancing apparatus 32 that is responsible for load sharing, to a proper general CPU for processing, and does not use a DMA (Direct Memory Access, direct memory access) manner. The general CPU sends the data packet to the coprocessor 34 when determining that DPI processing is required; receives a DPI processing result through a PCIE interface after the coprocessor 34 completes processing; and after further performing other service processing according to the DPI processing result, forwards, by using the network adapter 31, a data packet to be forwarded.

The load balancing apparatus 32 may be implemented by using an FPGA; the load balancing apparatus 32 may, on one hand, select a proper general CPU according to a load condition of each general CPU to process the data packet, and on the other hand, implement message receiving and transmitting logic. When the DPI device has only one general CPU, it is allowed that the load balancing apparatus 32 is not provided, and the message receiving and transmitting logic may be implemented by using another chip; the general CPU in this embodiment of the present invention may be specifically a Cavium general CPU.

In the DPI device provided by this embodiment of the present invention, a general processor and a coprocessor cooperate to implement DPI; and a sub-coprocessor in the coprocessor may be designed specially for a DPI service to offload a DPI function from the general processor, which reduces resource occupation of the general processor, so that the general processor can process other value-added services. Moreover, a processor core is provided in the coprocessor and the sub-coprocessor runs under invocation of the processor core, so that intermediate state information can be retained and interactions between the processor core and the sub-coprocessor are all in-chip interactions, which avoids frequent interactions between the coprocessor and the general processor, thereby shortening a processing delay.

FIG. 14 is a schematic structural diagram of a third DPI device according to an embodiment of the present invention. As shown in FIG. 14, in this embodiment, the DPI device includes two general CPUs (42 and 45 in FIG. 14); a DDR3 memory 43 is configured for a general CPU 42, and a DDR3 memory 46 is configured for a general CPU 45. A network adapter 41 is further provided in the DPI device; after receiving a data packet sent by another device in a network, the network adapter 41 first triggers, by using a PCI-E interface and in a DMA manner, the general CPU 42 to read the data packet, and stores the data packet into the DDR3 memory 43 used by the network adapter. If the general CPU 42 finds, after performing some processing, that DPI processing needs to be performed, the general CPU 42 sends the data packet in a DMA manner to the coprocessor 44 for DPI processing; after completing processing, the coprocessor 44 returns a DPI processing result to the general CPU 42 for further processing; then, the Sandy-Bridge general CPU 42 sends, to a next network device in the network by using the network adapter 41, a data packet that needs to be forwarded. It should be noted that the general CPU according to this embodiment of the present invention may be the Sandy-Bridge general CPU.

In the DPI device provided by this embodiment of the present invention, a general processor and a coprocessor cooperate to implement DPI; and a sub-coprocessor in the coprocessor may be designed specially for a DPI service to offload a DPI function from the general processor, which reduces resource occupation of the general processor, so that the general processor can process other value-added services. Moreover, a processor core is provided in the coprocessor and the sub-coprocessor runs under invocation of the processor core, so that intermediate state information can be retained and interactions between the processor core and the sub-coprocessor are all in-chip interactions, which avoids frequent interactions between the coprocessor and the general processor, thereby shortening a processing delay.

The deep packet inspection method and apparatus provided by the embodiments of the present invention may be applied to multiple application scenarios, for example but is not limited to using a DPI coprocessor to perform application protocol identification, deep protocol parsing, IDS (Intrusion Detection Systems), and policy engine on an enterprise network router; using a DPI coprocessor to perform application protocol identification, deep protocol parsing, and policy engine on a Router and a BRAS (Broadband Remote Access Server); using a DPI coprocessor to perform application protocol identification, deep protocol parsing, content filtering, and policy engine on a GGSN (Gateway GPRS Support Node); using a DPI coprocessor to perform application protocol identification, deep protocol parsing, content filtering, and policy engine on an application gateway; and using a DPI coprocessor to perform application protocol identification, deep protocol parsing, radio resource optimization, and policy engine on a radio access network element RNC (Radio Network Controller) and a NodeB.

A person of ordinary skill in the art may understand that all or a part of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of the present invention.

## Claims

1. A deep packet inspection DPI method, comprising:
Receiving (A10), by a transceiver module of a coprocessor, an original data packet sent by a general processor, and sending the original data packet to a processor core of the coprocessor;
Invoking (A20), by the processor core, at least one sub-coprocessor of the coprocessor to perform application layer parsing on the original data packet, so as to obtain an application layer parsing result of the original data packet, wherein the application layer parsing result is used to indicate application layer information of the original data packet; and
Sending (A30), by the processor core, the application layer parsing result to the general processor, so that the general processor processes the original data packet according to the application layer parsing result.

2. The deep packet inspection method according to claim 1, wherein:
the invoking, by the processor core, at least one sub-coprocessor of the coprocessor to perform application layer parsing on the original data packet, so as to obtain an application layer parsing result of the original data packet comprises:
invoking, by the processor core, a protocol identifying sub-coprocessor comprised in the coprocessor; invoking, by the protocol identifying sub-coprocessor under invocation of the processor core, a string matching engine comprised in the coprocessor; performing, by the string matching engine under invocation of the protocol identifying sub-coprocessor, string matching on the original data packet so as to obtain a feature matching result, and returning the feature matching result to the processor core; and determining, by the processor core, an application layer protocol type of the original data packet at least according to the feature matching result, and using the application layer protocol type as the application layer parsing result of the original data packet.

3. The deep packet inspection method according to claim 1, wherein:
the invoking, by the processor core, at least one sub-coprocessor of the coprocessor to perform application layer parsing on the original data packet, so as to obtain an application layer parsing result of the original data packet comprises:
invoking, by the processor core, a regular expression matching engine comprised in the coprocessor; performing, by the regular expression matching engine under invocation of the processor core, regular expression matching on the original data packet so as to obtain a feature matching result, and returning the feature matching result to the processor core; and determining, by the processor core, an application layer protocol type of the original data packet at least according to the feature matching result, and using the determined application layer protocol type as the application layer parsing result of the original data packet.

4. The deep packet inspection method according to claim 1, wherein the invoking, by the processor core, at least one sub-coprocessor of the coprocessor to perform application layer parsing on the original data packet, so as to obtain an application layer parsing result of the original data packet comprises:
invoking, by the processor core, a protocol identifying sub-coprocessor comprised in the coprocessor to identify an application layer protocol of the original data packet, so as to obtain an application layer protocol type of the original data packet; and
invoking, by the processor core, a protocol parsing sub-coprocessor comprised in the coprocessor to perform protocol parsing on the original data packet so as to obtain a parsing result, and using the parsing result and the application layer protocol type as the application layer parsing result of the original data packet.

5. The deep packet inspection method according to any one of claims 1 to 4, wherein the sending, by the processor core, the application layer parsing result to the general processor comprises:
sending, by the processor core, the application layer parsing result to a result report processing module comprised in the coprocessor; and
encapsulating, by the result report processing module, the application layer parsing result according to a preset format, and sending the encapsulated application layer parsing result to the general processor.

6. The deep packet inspection method according to claim 2, wherein the performing, by the string matching engine under invocation of the protocol identifying sub-coprocessor, string matching on the original data packet so as to obtain a feature matching result comprises:
under invocation of the protocol identifying sub-coprocessor, reading, by the string matching engine, a string matching algorithm state table from a first memory, and performing the string matching on the flow-processed data packet according to the string matching algorithm state table to obtain the feature matching result.

7. The deep packet inspection method according to claim 6, wherein the determining, by the processor core, the application layer protocol type of the original data packet at least according to the feature matching result comprises:
reading, by the processor core, a condition and rule data structure from a second memory, and determining the application layer protocol type of the original data packet according to the feature matching result and the condition and rule data structure.

8. A coprocessor (91;10), comprising a transceiver module (11), a sub-coprocessor (13), and a processor core (12), wherein
the transceiver module (11) is configured to receive an original data packet sent by a general processor, and send the original data packet to the processor core (12);
the processor core (12) is configured to invoke the sub-coprocessor (13) to perform application layer parsing on the original data packet, so as to obtain an application layer parsing result of the original data packet, wherein the application layer parsing result is used to indicate application layer information of the original data packet; and send the application layer parsing result to the general processor, so that the general processor processes the original data packet at least according to the application layer parsing result; and
the sub-coprocessor (13) is configured to perform the application layer parsing on the original data packet under invocation of the processor core (12), so as to obtain the application layer information of the original data packet.

9. The coprocessor (91;10) according to claim 8, wherein the sub-coprocessor (13) comprises: a protocol identifying sub-coprocessor and a string matching engine (132), wherein
the protocol identifying sub-coprocessor is specifically configured to invoke the string matching engine (132) under invocation of the processor core (12), wherein the string matching engine (132) performs string matching on the original data packet under invocation the protocol identifying sub-coprocessor so as to obtain a feature matching result, and returns the feature matching result to the processor core (12); and
the processor core (12) is specifically configured to determine an application layer protocol type of the original data packet at least according to the feature matching result, and use the determined application layer protocol type as the application layer parsing result of the original data packet and send the application layer parsing result to the general processor.

10. The coprocessor (91;10) according to claim 8, wherein the sub-coprocessor (13) is specifically a regular expression matching engine, wherein
the regular expression matching engine is configured to perform regular expression matching on the original data packet under invocation the processor core (12) so as to obtain a feature matching result, and return the feature matching result to the processor core (12); and
the processor core (12) is specifically configured to determine an application layer protocol type of the original data packet at least according to the feature matching result, and use the determined application layer protocol type as the application layer parsing result of the original data packet and send the application layer parsing result to the general processor.

11. The coprocessor (91;10) according to claim 10, wherein the sub-coprocessor (13) further comprises a protocol parsing sub-coprocessor (15), wherein
the protocol parsing sub-coprocessor (15) is configured to perform protocol parsing on the original data packet so as to obtain a parsing result, and return the parsing result to the processor core (12); and
the processor core (12) is further configured to send the parsing result to the general processor, so that the general processor processes the original data packet according to the application layer protocol type and the parsing result.

12. The coprocessor (91;10) according to any one of claims 8 to 11, further comprising a result report processing module (17), wherein
the processor core (12) is specifically configured to send the application layer parsing result to the result report processing module (17); and
the result report processing module (17) is configured to encapsulate the application layer parsing result according to a preset format, and send the encapsulated application layer parsing result to the general processor.

13. The coprocessor (91;10) according to claim 9, wherein:
the string matching engine (132) is specifically configured to, under invocation of the protocol identifying sub-coprocessor, read a string matching algorithm state table from a first memory (83), perform string matching on the original data packet according to the string matching algorithm state table to obtain the feature matching result, and return the feature matching result to the processor core (12), wherein the first memory (83) is configured to store the string matching algorithm state table.

14. The coprocessor (91;10) according to claim 13, wherein:
the processor core (12) is specifically configured to read a condition and rule data structure from a second memory (84), and determine the application layer protocol type according to the feature matching result and the condition and rule data structure, wherein the second memory (84) is configured to store the condition and rule data structure.

15. A deep packet inspection DPI device, comprising: the coprocessor (81) according to any one of claims 8 to 14 and a general processor (82).

## Patentansprüche

1. Verfahren zur tiefen Paketuntersuchung DPI (Deep Packet Inspection), umfassend:
Empfangen (A10) durch ein Sender/Empfängermodul eines Coprozessors eines durch einen allgemeinen Prozessor gesendeten ursprünglichen Datenpakets und Senden des ursprünglichen Datenpakets zu einem Prozessorkern des Coprozessors;
Aufrufen (A20) durch den Prozessorkern wenigstens eines Teil-Coprozessors des Coprozessors zum Durchführen von Syntaxanalyse auf Anwendungsebene an dem ursprünglichen Datenpaket um ein Syntaxanalyseergebnis auf Anwendungsebene des ursprünglichen Datenpakets zu erhalten, wobei das Syntaxanalyseergebnis auf Anwendungsebene benutzt wird, Informationen des ursprünglichen Datenpakets auf Anwendungsebene anzuzeigen; und
Senden (A30) durch den Prozessorkern des Syntaxanalyseergebnisses auf Anwendungsebene zu dem allgemeinen Prozessor, so dass der allgemeine Prozessor das ursprüngliche Datenpaket gemäß dem Syntaxanalyseergebnis auf Anwendungsebene verarbeitet.

2. Verfahren der tiefen Paketuntersuchung nach Anspruch 1, wobei:
das Aufrufen durch den Prozessorkern von wenigstens einem Teil-Coprozessor des Coprozessors zum Durchführen von Syntaxanalyse auf Anwendungsebene an dem ursprünglichen Datenpaket zum Erhalten eines Syntaxanalyseergebnisses auf Anwendungsebene des ursprünglichen Datenpakets Folgendes umfasst:
Aufrufen durch den Prozessorkern eines einen im Coprozessor umfassten Teil-Coprozessor kennzeichnenden Protokolls; Aufrufen durch das den Teil-Coprozessor kennzeichnende Protokoll unter Aufruf des Prozessorkerns einer Kettenanpassungsmaschine umfasst im Coprozessor; Durchführen durch die Kettenanpassungsmaschine unter Aufruf des einen Teil-Coprozessor kennzeichnenden Protokolls, von Kettenanpassung an dem ursprünglichen Datenpaket zum Erhalten eines Merkmalanpassungsergebnisses, und Rücksenden des Merkmalanpassungsergebnisses zu dem Prozessorkern; und Bestimmen durch den Prozessorkern einer Protokollart auf Anwendungsebene des ursprünglichen Datenpakets wenigstens gemäß dem Merkmalanpassungsergebnis und Verwenden der Protokollart auf Anwendungsebene als das Syntaxanalyseergebnis auf Anwendungsebene des ursprünglichen Datenpakets.

3. Verfahren tiefer Paketuntersuchung nach Anspruch 1, wobei:
das Aufrufen durch den Prozessorkern wenigstens eines Teil-Coprozessors des Coprozessors zum Durchführen von Syntaxanalyse auf Anwendungsebene an dem ursprünglichen Datenpaket zum Erhalten eines Syntaxanalyseergebnisses auf Anwendungsebene des ursprünglichen Datenpakets Folgendes umfasst:
Aufrufen durch den Prozessorkern einer regulären Ausdrucksanpassungsmaschine umfasst in dem Coprozessor; Durchführen durch die reguläre Ausdrucksanpassungsmaschine unter Aufruf des Prozessorkerns regulärer Ausdrucksanpassung an dem ursprünglichen Datenpaket zum Erhalten eines Merkmalanpassungsergebnisses und Rücksenden des Merkmalanpassungsergebnisses zu dem Prozessorkern; und Bestimmen durch den Prozessorkern einer Protokollart auf Anwendungsebene des ursprünglichen Datenpakets wenigstens gemäß dem Merkmalanpassungsergebnis und unter Verwendung der bestimmten Protokollart auf Anwendungsebene als das Syntaxanalyseergebnis auf Anwendungsebene des ursprünglichen Datenpakets.

4. Verfahren zur tiefen Paketuntersuchung nach Anspruch 1, wobei das Aufrufen durch den Prozessorkern wenigstens eines Teil-Coprozessors des Coprozessors zum Durchführen von Syntaxanalyse auf Anwendungsebene des ursprünglichen Datenpakets zum Erhalten eines Syntaxanalyseergebnisses auf Anwendungsebene des ursprünglichen Datenpakets Folgendes umfasst:
Aufrufen durch den Prozessorkern eines einen im Coprozessor umfassten Teil-Coprozessor kennzeichnenden Protokolls zum Kennzeichnen eines Protokolls auf Anwendungsebene des ursprünglichen Datenpakets zum Erhalten einer Protokollart auf Anwendungsebene des ursprünglichen Datenpakets; und
Aufrufen durch den Prozessorkern eines Protokolls der Syntaxanalyse eines im Coprozessor umfassten Teil-Coprozessors zum Durchführen von Protokollsyntaxanalyse an dem ursprünglichen Datenpaket zum Erhalten eines Syntaxanalyseergebnisses und Verwenden des Syntaxanalyseergebnisses und der Protokollart auf Anwendungsebene als das Syntaxanalyseergebnis auf Anwendungsebene des ursprünglichen Datenpakets.

5. Verfahren zur tiefen Paketuntersuchung nach einem beliebigen der Ansprüche 1 bis 4, wobei das Senden durch den Prozessorkern des Syntaxanalyseergebnisses auf Anwendungsebene zu dem allgemeinen Prozessor Folgendes umfasst:
Senden durch den Prozessorkern eines Syntaxanalyseergebnisses auf Anwendungsebene zu einem im Coprozessor umfassten Ergebnisberichtverarbeitungsmodul; und
Verkapseln durch das Ergebnisberichtverarbeitungsmodul des Syntaxanalyseergebnisses auf Anwendungsebene gemäß einem voreingestellten Format und Senden des verkapselten Syntaxanalyseergebnisses auf Anwendungsebene zu dem allgemeinen Prozessor.

6. Verfahren der tiefen Paketuntersuchung nach Anspruch 2, wobei das Durchführen durch die Kettenanpassungsmaschine unter Aufruf des einen Teil-Coprozessor kennzeichnenden Protokolls Kettenanpassung an dem ursprünglichen Datenpaket zum Erhalten eines Merkmalanpassungsergebnisses Folgendes umfasst:
unter Aufruf des einen Teil-Coprozessor kennzeichnenden Protokolls Auslesen durch die Kettenanpassungsmaschine einer Kettenanpassungsalgorithmus-Zustandstabelle aus einem ersten Speicher und Durchführen der Kettenanpassung an dem flussverarbeiteten Datenpaket gemäß der Kettenanpassungsalgorithmus-Zustandstabelle zum Erhalten des Merkmalanpassungsergebnisses.

7. Verfahren der tiefen Paketuntersuchung nach Anspruch 6, wobei das Bestimmen durch den Prozessorkern der Protokollart auf Anwendungsebene des ursprünglichen Datenpakets wenigstens gemäß dem Merkmalanpassungsergebnis Folgendes umfasst:
Auslesen durch den Prozessorkern einer Bedingung und Regel-Datenstruktur aus einem zweiten Speicher und Bestimmen der Protokollart auf Anwendungsebene des ursprünglichen Datenpakets gemäß dem Merkmalanpassungsergebnis und der Bedingungs- und Regeldatenstruktur.

8. Coprozessor (91; 10), umfassend ein Sender/Empfängermodul (11), einen Teil-Coprozessor (13) und einen Prozessorkern (12), wobei
das Sender/Empfängermodul (11) eingerichtet ist zum Empfangen eines durch einen allgemeinen Prozessor gesendeten ursprünglichen Datenpakets und Senden des ursprünglichen Datenpakets zu dem Prozessorkern (12);
der Prozessorkern (12) eingerichtet ist zum Aufrufen des Teil-Coprozessors (13) zum Durchführen von Syntaxanalyse auf Anwendungsebene an dem ursprünglichen Datenpaket zum Erhalten eines Syntaxanalyseergebnisses auf Anwendungsebene des ursprünglichen Datenpakets, wobei das Syntaxanalyseergebnis auf Anwendungsebene zum Anzeigen von Informationen auf Anwendungsebene des ursprünglichen Datenpakets benutzt wird; und Senden des Syntaxanalyseergebnisses auf Anwendungsebene zum allgemeinen Prozessor, so dass der allgemeine Prozessor das ursprüngliche Datenpaket wenigstens gemäß dem Syntaxanalyseergebnis auf Anwendungsebene verarbeitet; und
der Teil-Coprozessor (13) eingerichtet ist zum Durchführen der Syntaxanalyse auf Anwendungsebene an dem ursprünglichen Datenpaket unter Aufruf des Prozessorkerns (12) zum Erhalten der Informationen auf Anwendungsebene des ursprünglichen Datenpakets.

9. Coprozessor (91; 10) nach Anspruch 8, wobei der Teil-Coprozessor (13) ein einen Teil-Coprozessor kennzeichnendes Protokoll und eine Kettenanpassungsmaschine (132) umfasst, wobei
das einen Teil-Coprozessor kennzeichnende Protokoll besonders eingerichtet ist zum Aufrufen der Kettenanpassungsmaschine (132) unter Aufruf des Prozessorkerns (12), wobei die Kettenanpassungsmaschine (132) Kettenanpassung an dem ursprünglichen Datenpaket unter Aufruf des einen Teil-Coprozessor kennzeichnenden Protokolls durchführt, um ein Merkmalanpassungsergebnis zu erhalten, und das Merkmalanpassungsergebnis zum Prozessorkern (12) zurücksendet; und
der Prozessorkern (12) besonders eingerichtet ist zum Bestimmen einer Protokollart auf Anwendungsebene des ursprünglichen Datenpakets wenigstens gemäß dem Merkmalanpassungsergebnis und Verwenden der bestimmten Protokollart auf Anwendungsebene als das Syntaxanalyseergebnis auf Anwendungsebene des ursprünglichen Datenpakets und Senden des Syntaxanalyseergebnisses auf Anwendungsebene zu dem allgemeinen Prozessor.

10. Coprozessor (91; 10) nach Anspruch 8, wobei der Teil-Coprozessor (13) besonders eine reguläre Ausdrucksanpassungsmaschine ist, wobei
die reguläre Ausdrucksanpassungsmaschine eingerichtet ist zum Durchführen regulärer Ausdrucksanpassung an dem ursprünglichen Datenpaket unter Aufruf des Prozessorkerns (12), um ein Merkmalanpassungsergebnis zu erhalten, und Rücksenden des Merkmalanpassungsergebnisses zum Protokollkern (12); und
der Prozessorkern (12) besonders eingerichtet ist zum Bestimmen einer Protokollart auf Anwendungsebene des ursprünglichen Datenpakets wenigstens gemäß dem Merkmalanpassungsergebnis und Verwenden der bestimmten Protokollart auf Anwendungsebene als das Syntaxanalyseergebnis auf Anwendungsebene des ursprünglichen Datenpakets und Senden des Syntaxanalyseergebnisses auf Anwendungsebene zum allgemeinen Prozessor.

11. Coprozessor (91; 10) nach Anspruch 10, wobei der Teil-Coprozessor (13) weiterhin einen Protokoll-Syntaxanalyse-Teil-Coprozessor (15) umfasst, wobei der Protokoll-Syntaxanalyse-Teil-Coprozessor (15) eingerichtet ist zum Durchführen von Protokollsyntaxanalyse an dem ursprünglichen Datenpaket zum Erhalten eines Syntaxanalyseergebnisses und Rücksenden des Syntaxanalyseergebnisses zum Prozessorkern (12); und
der Prozessorkern (12) weiterhin eingerichtet ist zum Senden des Syntaxanalyseergebnisses zum allgemeinen Prozessor, so dass der allgemeine Prozessor das ursprüngliche Datenpaket gemäß der Protokollart der Anwendungsebene und dem Syntaxanalyseergebnis verarbeitet.

12. Coprozessor (91; 10) nach einem beliebigen der Ansprüche 8 bis 11, weiterhin umfassend ein Ergebnisberichtverarbeitungsmodul (17), wobei der Prozessorkern (12) besonders eingerichtet ist zum Senden des Syntaxanalyseergebnisses auf Anwendungsebene zu dem Ergebnisberichtverarbeitungsmodul (17); und
das Ergebnisberichtverarbeitungsmodul (17) eingerichtet ist zum Verkapseln des Syntaxanalyseergebnisses auf Anwendungsebene gemäß einem voreingestellten Format und Senden des verkapselten Syntaxanalyseergbnisses auf Anwendungsebene zum allgemeinen Prozessor.

13. Coprozessor (91; 10) nach Anspruch 9, wobei:
die Kettenanpassungsmaschine (132) besonders eingerichtet ist, unter Aufruf des einen Teil-Coprozessor kennzeichnenden Protokolls eine Kettenanpassungsalgorithmus-Zustandstabelle aus einem ersten Speicher (83) auszulesen, Kettenanpassung an dem ursprünglichen Datenpaket gemäß der Kettenanpassungsalgorithmus-Zustandstabelle durchzuführen zum Erhalten des Merkmalanpassungsergebnisses und das Merkmal-Anpassungsergebnis zum Prozessorkern (12) rückzusenden, wobei der erste Speicher (83) eingerichtet ist zum Speichern der Kettenanpassungsalgorithmus-Zustandstabelle.

14. Coprozessor (91; 10) nach Anspruch 13, wobei:
der Prozessorkern (12) besonders eingerichtet ist zum Auslesen einer Bedingungs- und Regeldatenstruktur aus einem zweiten Speicher (84) und Bestimmen der Protokollart auf Anwendungsebene gemäß dem Merkmalanpassungsergebnis und der Bedingungs- und Regeldatenstruktur, wobei der zweite Speicher (84) eingerichtet ist zum Speichern der Bedingungs- und Regeldatenstruktur.

15. Vorrichtung zur tiefen Paketuntersuchung DPI (Deep Packet Inspection), umfassend den Coprozessor (81) nach einem beliebigen der Ansprüche 8 bis 14 und einen allgemeinen Prozessor (82).

## Revendications

1. Procédé d'inspection détaillée des paquets, DPI, comprenant de :
recevoir (A10), par un module émetteur-récepteur d'un coprocesseur, un paquet de données d'origine envoyé par un processeur général, et envoyer le paquet de données d'origine à un coeur de processeur du coprocesseur ;
invoquer (A20), par le coeur de processeur, au moins un sous-coprocesseur du coprocesseur pour effectuer une analyse de couche d'application sur le paquet de données d'origine, de manière à obtenir un résultat d'analyse de couche d'application du paquet de données d'origine, dans lequel le résultat de l'analyse de couche d'application est utilisé pour indiquer des informations de couche d'application du paquet de données d'origine ; et
envoyer (A30), par le coeur de processeur, le résultat d'analyse de couche d'application au processeur général, de sorte que le processeur général traite le paquet de données d'origine en fonction du résultat d'analyse de couche d'application.

2. Procédé d'inspection détaillée des paquets selon la revendication 1, dans lequel :
l'invocation, par le coeur de processeur, d'au moins un sous-coprocesseur du coprocesseur pour effectuer une analyse de couche d'application sur le paquet de données d'origine afin d'obtenir un résultat d'analyse de couche d'application du paquet de données d'origine comprend de :
invoquer, par le coeur de processeur, un sous-coprocesseur d'identification de protocole compris dans le coprocesseur ; invoquer, par le sous-coprocesseur d'identification de protocole sous l'invocation du coeur de processeur, un moteur d'appariement de chaînes compris dans le coprocesseur ; effectuer, par le moteur d'appariement de chaînes sous l'invocation du sous-coprocesseur d'identification de protocole, un appariement de chaînes sur le paquet de données d'origine de manière à obtenir un résultat d'appariement de caractéristiques, et renvoyer le résultat d'appariement de caractéristiques au coeur de processeur ; et déterminer, par le coeur de processeur, un type de protocole de couche d'application du paquet de données d'origine au moins en fonction du résultat d'appariement de caractéristiques, et utiliser le type de protocole de couche d'application comme résultat d'analyse de couche d'application du paquet de données d'origine.

3. Procédé d'inspection détaillée des paquets selon la revendication 1, dans lequel :
l'invocation, par le coeur de processeur, d'au moins un sous-coprocesseur du coprocesseur pour effectuer une analyse de couche d'application sur le paquet de données d'origine afin d'obtenir un résultat d'analyse de couche d'application du paquet de données d'origine comprend de :
invoquer, par le coeur de processeur, un moteur d'appariement d'expressions régulières compris dans le coprocesseur ; effectuer, par le moteur d'appariement d'expressions régulières sous l'invocation du coeur de processeur, un appariement d'expressions régulières sur le paquet de données d'origine de manière à obtenir un résultat d'appariement de caractéristiques, et renvoyer le résultat d'appariement de caractéristiques au coeur de processeur ; et déterminer, par le coeur de processeur, un type de protocole de couche d'application du paquet de données d'origine au moins en fonction du résultat d'appariement de caractéristiques, et utiliser le type de protocole de couche d'application déterminé comme résultat d'analyse de couche d'application du paquet de données d'origine.

4. Procédé d'inspection détaillée des paquets selon la revendication 1, dans lequel l'invocation, par le coeur de processeur, d'au moins un sous-coprocesseur du coprocesseur pour effectuer une analyse de couche d'application sur le paquet de données d'origine afin d'obtenir un résultat d'analyse de couche d'application du paquet de données d'origine comprend de :
invoquer, par le coeur de processeur, un sous-coprocesseur d'identification de protocole compris dans le coprocesseur pour identifier un protocole de couche d'application du paquet de données d'origine de manière à obtenir un type de protocole de couche d'application du paquet de données d'origine ; et
invoquer, par le coeur de processeur, un sous-coprocesseur d'analyse de protocole compris dans le coprocesseur pour effectuer une analyse de protocole sur le paquet de données d'origine de manière à obtenir un résultat d'analyse, et utiliser le résultat d'analyse et le type de protocole de couche d'application comme résultat d'analyse de couche d'application du paquet de données d'origine.

5. Procédé d'inspection de paquets profonds selon l'une quelconque des revendications 1 à 4, dans lequel l'envoi, par le coeur de processeur, du résultat d'analyse de couche d'application au processeur général comprend de :
envoyer, par le coeur de processeur, le résultat d'analyse de couche d'application à un module de traitement de rapport de résultat compris dans le coprocesseur ; et encapsuler, par le module de traitement de rapport de résultat, le résultat d'analyse de couche d'application selon un format prédéfini, et envoyer le résultat d'analyse de couche d'application encapsulé au processeur général.

6. Procédé d'inspection détaillée des paquets selon la revendication 2, dans lequel l'exécution, par le moteur d'appariement de chaînes sous l'invocation du sous-coprocesseur d'identification de protocole, d'un appariement de chaînes sur le paquet de données d'origine de manière à obtenir un résultat d'appariement de caractéristiques comprend de :
sous l'invocation du sous-coprocesseur d'identification de protocole, lire, par le moteur d'appariement de chaînes, une table d'états d'algorithme d'appariement de chaînes à partir d'une première mémoire, et effectuer l'appariement de chaînes sur le paquet de données traité en flux en fonction de la table d'états d'algorithme d'appariement de chaînes pour obtenir le résultat d'appariement de caractéristiques.

7. Procédé d'inspection détaillée des paquets selon la revendication 6, dans lequel la détermination, par le coeur de processeur, du type de protocole de couche d'application du paquet de données d'origine au moins en fonction du résultat d'appariement de caractéristiques comprend de :
lire, par le coeur de processeur, une structure de données de conditions et de règles à partir d'une seconde mémoire, et déterminer le type de protocole de couche d'application du paquet de données d'origine en fonction du résultat d'appariement de caractéristique et de la structure de données de conditions et de règles.

8. Coprocesseur (91 ; 10), comprenant un module émetteur-récepteur (11), un sous-coprocesseur (13) et un coeur de processeur (12), dans lequel
le module émetteur-récepteur (11) est configuré pour recevoir un paquet de données d'origine envoyé par un processeur général, et envoyer le paquet de données d'origine au coeur de processeur (12) ;
le coeur de processeur (12) est configuré pour invoquer le sous-coprocesseur (13) pour effectuer une analyse de couche d'application sur le paquet de données d'origine de manière à obtenir un résultat d'analyse de couche d'application du paquet de données d'origine, dans lequel le résultat d'analyse de couche d'application est utilisé pour indiquer des informations de couche d'application du paquet de données d'origine ; et envoyer le résultat d'analyse de couche d'application au processeur général, de sorte que le processeur général traite le paquet de données d'origine au moins en fonction du résultat d'analyse de couche d'application ; et
le sous-coprocesseur (13) est configuré pour effectuer l'analyse de couche d'application sur le paquet de données d'origine sous l'invocation du coeur de processeur (12) de manière à obtenir les informations de couche d'application du paquet de données d'origine.

9. Coprocesseur (91, 10) selon la revendication 8, dans lequel le sous-coprocesseur (13) comprend : un sous-coprocesseur d'identification de protocole et un moteur d'appariement de chaînes (132), dans lequel
le sous-coprocesseur d'identification de protocole est spécifiquement configuré pour invoquer le moteur d'appariement de chaînes (132) sous l'invocation du coeur de processeur (12), dans lequel le moteur d'appariement de chaînes (132) effectue un appariement de chaînes sur le paquet de données d'origine sous l'invocation du coprocesseur d'identification de protocole de manière à obtenir un résultat d'appariement de caractéristiques, et renvoie le résultat d'appariement de caractéristiques au coeur de processeur (12) ; et
le coeur de processeur (12) est spécifiquement configuré pour déterminer un type de protocole de couche d'application du paquet de données d'origine au moins en fonction du résultat d'appariement de caractéristiques, et utiliser le type de protocole de couche d'application déterminé comme résultat d'analyse de couche d'application du paquet de données d'origine et envoyer le résultat d'analyse de couche application au processeur général.

10. Coprocesseur (91, 10) selon la revendication 8, dans lequel le sous-coprocesseur (13) est spécifiquement un moteur d'appariement d'expressions régulières, dans lequel le moteur d'appariement d'expressions régulières est configuré pour effectuer un appariement d'expressions régulières sur le paquet de données d'origine sous l'invocation du coeur de processeur (12) afin d'obtenir un résultat d'appariement de caractéristiques, et renvoyer le résultat d'appariement de caractéristiques au coeur de processeur (12) ; et
le coeur de processeur (12) est spécifiquement configuré pour déterminer un type de protocole de couche d'application du paquet de données d'origine au moins en fonction du résultat d'appariement de caractéristiques, et utiliser le type de protocole de couche d'application déterminé comme résultat d'analyse de couche d'application du paquet de données d'origine et envoyer le résultat d'analyse de couche d'application au processeur général.

11. Coprocesseur (91, 10) selon la revendication 10, dans lequel le sous-coprocesseur (13) comprend en outre un sous-coprocesseur d'analyse de protocole (15), dans lequel
le sous-coprocesseur d'analyse de protocole (15) est configuré pour effectuer une analyse de protocole sur le paquet de données d'origine de manière à obtenir un résultat d'analyse, et renvoyer le résultat d'analyse au coeur de processeur (12) ; et
le coeur de processeur (12) est en outre configuré pour envoyer le résultat d'analyse au processeur général, de sorte que le processeur général traite le paquet de données d'origine en fonction du type de protocole de couche d'application et du résultat d'analyse.

12. Coprocesseur (91, 10) selon l'une quelconque des revendications 8 à 11, comprenant en outre un module de traitement de rapport de résultat (17), dans lequel le coeur de processeur (12) est spécifiquement configuré pour envoyer le résultat d'analyse de couche d'application au module de traitement de rapport de résultat (17) ; et
le module de traitement de rapport de résultat (17) est configuré pour encapsuler le résultat d'analyse de couche d'application selon un format prédéfini, et envoyer le résultat d'analyse de couche d'application encapsulé au processeur général.

13. Coprocesseur (91, 10) selon la revendication 9, dans lequel :
le moteur d'appariement de chaînes (132) est spécifiquement configuré pour, sous l'invocation du sous-coprocesseur d'identification de protocole, lire une table d'états d'algorithme d'appariement de chaînes à partir d'une première mémoire (83), effectuer un appariement de chaînes sur le paquet de données d'origine en fonction de la table d'états d'algorithme d'appariement de chaînes pour obtenir le résultat d'appariement de caractéristiques, et renvoyer le résultat d'appariement de caractéristiques au coeur de processeur (12), dans lequel la première mémoire (83) est configurée pour stocker la table d'états d'algorithme d'appariement de chaînes.

14. Coprocesseur (91, 10) selon la revendication 13, dans lequel :
le coeur de processeur (12) est spécifiquement configuré pour lire une structure de données de conditions et de règles à partir d'une seconde mémoire (84), et déterminer le type de protocole de couche d'application en fonction du résultat d'appariement de caractéristiques et de la structure de données de conditions et de règles, dans lequel la seconde mémoire (84) est configurée pour stocker la structure de données de conditions et de règles.

15. Dispositif d'inspection détaillée des paquets, DPI, comprenant : le coprocesseur (81) selon l'une quelconque des revendications 8 à 14 et un processeur général (82).
